# EUROPEAN PATENT APPLICATION

(11) **EP 3 756 887 A1**
(43) Date of publication of application: **30.12.2020**
(21) Application number: 19757723.2
(22) Date of filing: 14.02.2019
(51) Int. Cl.: B32B 27/30, B32B 17/10, B32B 27/18, C03C 17/34, C09D 4/02, C09D 5/00, C09D 5/16, C09D 7/20, C09D 7/48, C09D 7/63

(54) **ACTIVE ENERGY RAY CURABLE RESIN COMPOSITION, ANTIFOGGING ANTIFOULING LAMINATE, AND MANUFACTURING METHOD, ARTICLE, AND ANTIFOGGING METHOD THEREOF**

(30) Priority: 21.02.2018 JP 2018028753; 30.11.2018 JP 2018224527
(71) Applicant: Dexerials Corporation, Tokyo 141-0032 (JP)
(72) Inventor: SUZUKI, Ryo, Tokyo 141-0032 (JP); HARA, Shinobu, Tokyo 141-0032 (JP); MIZUNO, Mikihisa, Tokyo 141-0032 (JP)
(74) Representative: Graf von Stosch Patentanwaltsgesellschaft mbH
(86) International application number: PCT/JP2019/005353
(87) International publication number: WO 2019/163638

(57) **Abstract**

An anti-fogging and anti-fouling laminate including: a substrate; a primer layer; and an anti-fogging and anti-fouling layer having a flat surface,
wherein an average thickness of the primer layer is 0.5 µm or more,
the anti-fogging and anti-fouling layer has pencil hardness of 2H or harder, a coefficient of kinetic friction of 0.4 or less, and an average thickness of 20 µm or more,
the anti-fogging and anti-fouling layer is a cured product of an active energy ray curable resin composition,
the active energy ray curable resin composition includes a hydrophilic monomer in a predetermined amount and a hydrophobic monomer in a predetermined amount, and
the active energy ray curable resin composition further includes a UV absorber having no triazine structure and a radical scavenger having a pkb of 9.0 or less in predetermined amounts.

## Description

### Technical Field

The present invention relates to an anti-fogging and anti-fouling laminate that can be used in a wide variety of ranges such as building applications, industrial applications, automobile applications, optical applications, and solar cell panels, a production method thereof, a product using the anti-fogging and anti-fouling laminate, an anti-fogging method using the anti-fogging and anti-fouling laminate, and an active energy ray curable resin composition applicable to formation of an anti-fogging and anti-fouling layer of the anti-fogging and anti-fouling laminate.

### Background Art

In order to decorate and protect the surfaces of various products, resin films and glass and the like are attached to the surfaces.

However, the resin films and glass decorating and protecting the surfaces of products sometimes get cloudy to deteriorate visibility and good appearance of the products.

Therefore, in order to prevent such deterioration of visibility and good appearance of the products, an anti-fogging treatment is applied to the resin films and glass.

For example, an electron beam curable hard coat sheet that has an anti-fogging property, an anti-fouling property, and scratch resistance, and has a specific formulation has been proposed (for example, see PTL 1).

Generally, products such as mirrors, glass windows, and glasses, which are required to have an anti-fogging property, may be exposed to higher temperature and higher humidity conditions than normal temperature and normal humidity in some cases. In that case, deterioration of the anti-fogging property or loss of brightness occurs on the anti-fogging and anti-fouling layer, the products are deteriorated in visibility, which is problematic.

Meanwhile, in the case of outdoor use of a product, the films of the surfaces of the products are degraded by long-term exposure to sunlight. In particular, a cured film of an active energy ray curable resin composition may become brittle, cracked, and changed in color when exposed to sunlight. In view thereof, in order to reduce degradation of the film of the surface of the product due to sunlight, a UV absorber may be added to a composition for forming a film applied to the surface of a product (for example, see [Claim 6] of PTL 2).

However, an anti-fogging and anti-fouling laminate is not known that is excellent in appearance, adhesiveness, an anti-fouling property, and scratch resistance, is excellent in an anti-fogging property even under higher temperature and higher humidity conditions, and further is not degraded in those properties and hardly causes color change even when exposed to ultraviolet rays for a long period of time. There is a demand for such an anti-fogging and anti-fouling laminate that is excellent in appearance, adhesiveness, an anti-fouling property, and scratch resistance, is excellent in an anti-fogging property even under higher temperature and higher humidity conditions, and further is not degraded in those properties and hardly causes color change even when exposed to ultraviolet rays for a long period of time.

### Citation List

### Patent Literature

PTL 1 Japanese Patent No. 3760669
PTL 2 Japanese Patent No. 4872670

### Summary of Invention

### Technical Problem

An object of the present invention is to solve the existing problems in prior art and to achieve the following object. That is, an object of the present invention is to provide: an anti-fogging and anti-fouling laminate that is excellent in appearance, adhesiveness, an anti-fouling property, and scratch resistance, is excellent in an anti-fogging property even under higher temperature and higher humidity conditions, and further is not degraded in those properties and hardly causes color change even when exposed to ultraviolet rays for a long period of time; a production method thereof; a product using the anti-fogging and anti-fouling laminate; an anti-fogging method using the anti-fogging and anti-fouling laminate; and an active energy ray curable resin composition applicable to formation of an anti-fogging and anti-fouling layer of the anti-fogging and anti-fouling laminate.

### Solution to Problem

Means for solving the problems are as follows. That is,
<1> An anti-fogging and anti-fouling laminate including:
   a substrate;
   a primer layer on the substrate; and
   an anti-fogging and anti-fouling layer on the primer layer, the anti-fogging and anti-fouling layer having a flat surface,
   wherein an average thickness of the primer layer is 0.5 µm or more,
   the anti-fogging and anti-fouling layer has pencil hardness of 2H or harder, a coefficient of kinetic friction of 0.4 or less, and an average thickness of 20 µm or more,
   the anti-fogging and anti-fouling layer is a cured product of an active energy ray curable resin composition,
   the active energy ray curable resin composition includes a hydrophilic monomer having an alkylene oxide equivalent of 100 or less and an acrylic equivalent of 200 or more but 500 or less, and a hydrophobic monomer including at least one selected from the group consisting of fluorine and silicon,
   a content of the hydrophilic monomer in the active energy ray curable resin composition is 55% by mass or more but 90% by mass or less relative to non-volatile matter of the active energy ray curable resin composition,
   a content of the hydrophobic monomer in the active energy ray curable resin composition is 0.001% by mass or more but 1.0% by mass or less relative to the non-volatile matter of the active energy ray curable resin composition,
   the active energy ray curable resin composition further includes a UV absorber having no triazine structure and a radical scavenger having a pkb of 9.0 or less,
   a content of the UV absorber having no triazine structure in the active energy ray curable resin composition is 0.1% by mass or more but 2.0% by mass or less relative to the non-volatile matter of the active energy ray curable resin composition, and
   a content of the radical scavenger having a pkb of 9.0 or less in the active energy ray curable resin composition is 0.08% by mass or more but 3.0% by mass or less relative to the non-volatile matter of the active energy ray curable resin composition.
<2> An anti-fogging and anti-fouling laminate including:
   a substrate;
   a primer layer on the substrate; and
   an anti-fogging and anti-fouling layer on the primer layer, the anti-fogging and anti-fouling layer having a flat surface,
   wherein an average thickness of the primer layer is 0.5 µm or more,
   the anti-fogging and anti-fouling layer has pencil hardness of 2H or harder, a coefficient of kinetic friction of 0.4 or less, and an average thickness of 20 µm or more,
   the anti-fogging and anti-fouling layer is a cured product of an active energy ray curable resin composition,
   the active energy ray curable resin composition includes a hydrophilic monomer having an alkylene oxide equivalent of 100 or less and an acrylic equivalent of 200 or more but 500 or less, and a hydrophobic monomer including at least one selected from the group consisting of fluorine and silicon,
   a content of the hydrophilic monomer in the active energy ray curable resin composition is 55% by mass or more but 90% by mass or less relative to non-volatile matter of the active energy ray curable resin composition,
   a content of the hydrophobic monomer in the active energy ray curable resin composition is 0.001% by mass or more but 1.0% by mass or less relative to the non-volatile matter of the active energy ray curable resin composition,
   the active energy ray curable resin composition further includes a UV absorber having a radical scavenging structure, no triazine structure, and a pkb of 9.0 or less, and
   a content of the UV absorber having a radical scavenging structure, no triazine structure, and a pkb of 9.0 or less in the active energy ray curable resin composition is 0.1% by mass or more but 2.0% by mass or less relative to the non-volatile matter of the active energy ray curable resin composition.
<3> The anti-fogging and anti-fouling laminate according to <1> or <2>,
   wherein the anti-fogging and anti-fouling layer absorbs 70% or more of near ultraviolet rays having wavelengths of 350 nm or shorter.
<4> The anti-fogging and anti-fouling laminate according to any one of <1> to <3>,
   wherein a surface of the anti-fogging and anti-fouling layer has a pure water contact angle of 80° or more and a hexadecane contact angle of 35° or more.
<5> The anti-fogging and anti-fouling laminate according to <1> to <4>,
   wherein the substrate is a substrate made of glass.
<6> The anti-fogging and anti-fouling laminate according to any one of <1> to <5>,
   wherein an average thickness of the anti-fogging and anti-fouling layer is 20 µm to 100 µm.
<7> The anti-fogging and anti-fouling laminate according to any one of <1> to <6>,
   wherein an average thickness of the primer layer is 1 µm to 5 µm.
<8> The anti-fogging and anti-fouling laminate according to any one of <1> to <7>,
   wherein the active energy ray curable resin composition includes a crosslinking agent having an alkylene oxide equivalent of more than 100 and an acrylic equivalent of less than 400,
   wherein a content of the crosslinking agent in the active energy ray curable resin composition is 20% by mass or more but 40% by mass or less relative to the non-volatile matter of the active energy ray curable resin composition.
<9> A product including:
   the anti-fogging and anti-fouling laminate according to any one of <1> to <8> on a surface of the product.
<10> A method for producing the anti-fogging and anti-fouling laminate according to any one of <1> to <8>, the method including:
   irradiating an uncured layer formed on the primer layer of the active energy ray curable resin composition with ultraviolet rays under an atmosphere having an oxygen concentration of less than 1.0% by volume, to form the anti-fogging and anti-fouling layer.
<11> An anti-fogging method including:
   warming the anti-fogging and anti-fouling laminate according to any one of <1> to <8> to a temperature equal to or higher than normal temperature, to improve an anti-fogging property of the anti-fogging and anti-fouling layer.
<12> An anti-fogging method including:
   cleaning the anti-fogging and anti-fouling layer of the anti-fogging and anti-fouling laminate according to any one of <1> to <8> to maintain an anti-fogging property of the anti-fogging and anti-fouling layer.
<13> An active energy ray curable resin composition including:
   a hydrophilic monomer;
   a hydrophobic monomer; and
   a photopolymerization initiator,
   wherein the hydrophilic monomer has an alkylene oxide equivalent of 100 or less and an acrylic equivalent of 200 or more but 500 or less,
   the hydrophobic monomer includes at least one selected from the group consisting of fluorine and silicon,
   a content of the hydrophilic monomer in the active energy ray curable resin composition is 55% by mass or more but 90% by mass or less relative to non-volatile matter of the active energy ray curable resin composition,
   a content of the hydrophobic monomer in the active energy ray curable resin composition is 0.001% by mass or more but 1.0% by mass or less relative to the non-volatile matter of the active energy ray curable resin composition,
   the active energy ray curable resin composition further includes a UV absorber having no triazine structure and a radical scavenger having a pkb of 9.0 or less,
   a content of the UV absorber having no triazine structure in the active energy ray curable resin composition is 0.1% by mass or more but 2.0% by mass or less relative to the non-volatile matter of the active energy ray curable resin composition, and
   a content of the radical scavenger having a pkb of 9.0 or less in the active energy ray curable resin composition is 0.08% by mass or more but 3.0% by mass or less relative to the non-volatile matter of the active energy ray curable resin composition.
<14> An active energy ray curable resin composition including:
   a hydrophilic monomer;
   a hydrophobic monomer; and
   a photopolymerization initiator,
   wherein the hydrophilic monomer has an alkylene oxide equivalent of 100 or less and an acrylic equivalent of 200 or more but 500 or less,
   the hydrophobic monomer includes at least one selected from the group consisting of fluorine and silicon,
   a content of the hydrophilic monomer in the active energy ray curable resin composition is 55% by mass or more but 90% by mass or less relative to non-volatile matter of the active energy ray curable resin composition,
   a content of the hydrophobic monomer in the active energy ray curable resin composition is 0.001% by mass or more but 1.0% by mass or less relative to the non-volatile matter of the active energy ray curable resin composition,
   the active energy ray curable resin composition further includes a UV absorber having a radical scavenging structure, no triazine structure, and a pkb of 9.0 or less, and
   a content of the UV absorber having a radical scavenging structure, no triazine structure, and a pkb of 9.0 or less in the active energy ray curable resin composition is 0.1% by mass or more but 2.0% by mass or less relative to the non-volatile matter of the active energy ray curable resin composition.
<15> The active energy ray curable resin composition according to <13> or <14>,
   wherein a surface of an anti-fogging and anti-fouling layer having a flat surface, which is obtained by curing the active energy ray curable resin composition through active energy rays, has pencil hardness of 2H or harder and a coefficient of kinetic friction of 0.40 or less.
<16> The active energy ray curable resin composition according to any one of <13> to <15>,
   wherein the surface of the anti-fogging and anti-fouling layer has a pure water contact angle of 80° or more and a hexadecane contact angle of 35° or more.
<17> The active energy ray curable resin composition according to any one of <13> to <16>,
   wherein the active energy ray curable resin composition includes a solvent having a boiling point of 80°C or more.
<18> The active energy ray curable resin composition according to any one of <13> to <17>,
   wherein the active energy ray curable resin composition includes a crosslinking agent having an alkylene oxide equivalent of more than 100 and an acrylic equivalent of less than 400,
   wherein a content of the crosslinking agent in the active energy ray curable resin composition is 20% by mass or more but 40% by mass or less relative to the non-volatile matter of the active energy ray curable resin composition.

### Advantageous Effects of Invention

According to the present invention, it is possible to solve the existing problems in prior art, to achieve the aforementioned object, and to provide: an anti-fogging and anti-fouling laminate, which is excellent in appearance, adhesiveness, an anti-fouling property, and scratch resistance, is excellent in an anti-fogging property even under higher temperature and higher humidity conditions, and further is not degraded in those properties and hardly causes color change even when exposed to ultraviolet rays for a long period of time; a production method thereof; a product using the anti-fogging and anti-fouling laminate; an anti-fogging method using the anti-fogging and anti-fouling laminate; and an active energy ray curable resin composition applicable to formation of an anti-fogging and anti-fouling layer of the anti-fogging and anti-fouling laminate.

### Brief Description of Drawings

FIG. 1 is a schematic cross-sectional view of an example of an anti-fogging and anti-fouling laminate of the present invention;
FIG. 2A is a process drawing for describing an example of manufacturing a product of the present invention by in-mold molding;
FIG. 2B is a process drawing for describing an example of manufacturing a product of the present invention by in-mold molding;
FIG. 2C is a process drawing for describing an example of manufacturing a product of the present invention by in-mold molding;
FIG. 2D is a process drawing for describing an example of manufacturing a product of the present invention by in-mold molding;
FIG. 2E is a process drawing for describing an example of manufacturing a product of the present invention by in-mold molding;
FIG. 2F is a process drawing for describing an example of manufacturing a product of the present invention by in-mold molding;
FIG. 3 is a schematic cross-sectional view of an example of a product of the present invention (part 1);
FIG. 4 is a schematic cross-sectional view of an example of a product of the present invention (part 2);
FIG. 5 is a schematic cross-sectional view of an example of a product of the present invention (part 3);
FIG. 6 is a schematic cross-sectional view of an example of a product of the present invention (part 4); and
FIG. 7 is a chart of regular reflectance spectra of an anti-fogging and anti-fouling laminate of Example 1, a laminate of Comparative Example 1, and a substrate.

### Description of Embodiments

### (Anti-fogging and anti-fouling laminate)

An anti-fogging and anti-fouling laminate of the present invention includes at least a substrate, a primer layer, and an anti-fogging and anti-fouling layer, and further includes other members if necessary.

### <Characteristics of anti-fogging and anti-fouling laminate>

One aspect of the anti-fogging and anti-fouling laminate has the following characteristics.

An average thickness of the primer layer is 0.5 µm or more.

Pencil hardness of the anti-fogging and anti-fouling layer is 2H or harder.

A coefficient of kinetic friction of the anti-fogging and anti-fouling layer is 0.40 or less.

An average thickness of the anti-fogging and anti-fouling layer is 10 µm or more.

The anti-fogging and anti-fouling layer is a cured product of an active energy ray curable resin composition.

The active energy ray curable resin composition includes a hydrophilic monomer having an alkylene oxide equivalent of 100 or less and an acrylic equivalent of 200 or more but 500 or less, and a hydrophobic monomer including at least one selected from the group consisting of fluorine and silicon.

A content of the hydrophilic monomer in the active energy ray curable resin composition is 55% by mass or more but 90% by mass or less relative to non-volatile matter of the active energy ray curable resin composition.

A content of the hydrophobic monomer in the active energy ray curable resin composition is 0.001% by mass or more but 10% by mass or less relative to the non-volatile matter of the active energy ray curable resin composition.

The active energy ray curable resin composition further includes a UV absorber having no triazine structure and a radical scavenger having a pkb of 9.0 or less.

A content of the UV absorber having no triazine structure in the active energy ray curable resin composition is 0.1% by mass or more but 2.0% by mass or less relative to non-volatile matter of the active energy ray curable resin composition.

A content of the radical scavenger having a pkb of 9.0 or less in the active energy ray curable resin composition is 0.08% by mass or more but 3.0% by mass or less relative to non-volatile matter of the active energy ray curable resin composition.

When the anti-fogging and anti-fouling laminate has the aforementioned characteristics, the anti-fogging and anti-fouling laminate is excellent in appearance, adhesiveness, an anti-fouling property, and scratch resistance, is excellent in an anti-fogging property even under higher temperature and higher humidity conditions, and further is not degraded in those properties and hardly causes color change even when exposed to ultraviolet rays for a long period of time.

Another aspect of the anti-fogging and anti-fouling laminate has the following characteristics.

An average thickness of the primer layer is 0.5 µm or more.

Pencil hardness of the anti-fogging and anti-fouling layer is 2H or harder.

A coefficient of kinetic friction of the anti-fogging and anti-fouling layer is 0.40 or less.

An average thickness of the anti-fogging and anti-fouling layer is 10 µm or more.

The anti-fogging and anti-fouling layer is a cured product of an active energy ray curable resin composition.

The active energy ray curable resin composition includes a hydrophilic monomer having an alkylene oxide equivalent of 100 or less and an acrylic equivalent of 200 or more but 500 or less, and a hydrophobic monomer including at least one selected from the group consisting of fluorine and silicon.

A content of the hydrophilic monomer in the active energy ray curable resin composition is 55% by mass or more but 90% by mass or less relative to non-volatile matter of the active energy ray curable resin composition.

A content of the hydrophobic monomer in the active energy ray curable resin composition is 0.001% by mass or more but 10% by mass or less relative to the non-volatile matter of the active energy ray curable resin composition.

The active energy ray curable resin composition further includes a UV absorber having a radical scavenging structure, no triazine structure, and a pkb of 9.0 or less.

A content of the UV absorber having a radical scavenging structure, no triazine structure, and a pkb of 9.0 or less in the active energy ray curable resin composition is 0.1% by mass or more but 2.0% by mass or less relative to non-volatile matter of the active energy ray curable resin composition.

When the anti-fogging and anti-fouling laminate has the aforementioned characteristics, the anti-fogging and anti-fouling laminate is excellent in appearance, adhesiveness, an anti-fouling property, and scratch resistance, is excellent in an anti-fogging property even under higher temperature and higher humidity conditions, and further is not degraded in those properties and hardly causes color change even when exposed to ultraviolet rays for a long period of time.

### <Substrate>

The substrate is not particularly limited and may be appropriately selected depending on the intended purpose. Examples thereof include substrates made of a resin and inorganic substrates.

### <<Inorganic substrate>>

Examples of the inorganic substrate include substrates made of glass, substrates made of quartz, and substrates made of sapphire.

The substrate made of glass is not particularly limited and may be appropriately selected depending on the intended purpose. Examples thereof include silica glass (silicate glass), soda-lime glass, and potash glass.

The substrate made of glass may be tempered glass, laminated glass, and heat-resistant glass.

The substrate made of glass may be those used in applications such as window glass for automobiles, window glass for construction, lens, mirror, and goggles.

A shape of the substrate made of glass is typically a form of plate, but may be any form such as a form of sheet and a form of curvature.

### <<Substrate made of resin>>

The material of the substrate made of a resin is not particularly limited and may be appropriately selected depending on the intended purpose. Examples of the material include triacetylcellulose (TAC), polyester (TPEE), polyethylene terephthalate (PET), polyethylenenaphthalate (PEN), polyimide (PI), polyamide (PA), aramid, polyethylene (PE), polyacrylate, polyethersulfone, polysulfone, polypropylene (PP), polystyrene, diacetylcellulose, polyvinyl chloride, acrylic resins (PMMA), polycarbonate (PC), epoxy resins, urea resins, urethane resins, melamine resins, phenol resins, acrylonitrile-butadiene-styrene copolymer, cycloolefin polymer (COP), cycloolefin copolymer (COC), PC/PMMA laminate, and rubber-added PMMA.

The substrate preferably has transparency.

A shape of the substrate, which is not particularly limited and may be appropriately selected depending on the intended purpose, is preferably form of a film.

When the substrate is form of a film, an average thickness of the substrate is not particularly limited and may be appropriately selected depending on the intended purpose, but is preferably 5 µm or more but 1,000 µm or less, more preferably 50 µm or more but 500 µm or less.

On the surface of the substrate, letters, patterns, and images, etc. may be printed.

On the surface of the substrate, a binder layer may be provided in order to increase adhesiveness between the substrate and a molding material when the anti-fogging and anti-fouling laminate is molded and processed, or in order to protect the letters, the patterns, and the images from flow pressure of the molding material during the molding and processing. As the material of the binder layer, various adhesive agents can be used in addition to various binders such as acryl-based binders, urethane-based binders, polyester-based binders, polyamide-based binders, ethylene butyl alcohol-based binders, and ethylene-vinyl-acetate-copolymer-based binders. Note that, two or more binder layers may be formed. As the binder to be used, those having heat-sensitivity and pressure-sensitivity suitable for a molding material can be selected.

A surface of the substrate opposite to the surface of the substrate at which the anti-fogging and anti-fouling layer is disposed may have wrinkle patterns. This makes it possible to prevent blocking when a plurality of the anti-fogging and anti-fouling laminates are laminated. As a result, a handling property in the post-process is improved and a product can be effectively produced.

The wrinkle patterns can be formed through, for example, emboss processing.

Here, the blocking means difficulty in pulling sheets apart when a plurality of sheets are laminated.

### <Primer layer>

The anti-fogging and anti-fouling layer does not have a sufficient adhesiveness to the substrate. Therefore, in the anti-fogging and anti-fouling laminate, a primer layer, which improves the anti-fogging and anti-fouling layer in adhesiveness to the substrate, is disposed between the substrate and the anti-fogging and anti-fouling layer.

When the primer layer is thin, an effect of improving adhesiveness is insufficient. Therefore, an average thickness of the primer layer is 0.5 µm or more.

The average thickness of the primer layer is not particularly limited and may be appropriately selected depending on the intended purpose, so long as it is 0.5 µm or more. However, the average thickness is preferably 1 µm or more but 5 µm or less, more preferably 2 µm or more but 5 µm or less.

The average thickness of the primer layer falling within the preferable ranges hardly decreases adhesiveness and makes it possible to prevent the anti-fogging and anti-fouling layer from being exfoliated, even when it is exposed to high-temperature vapor (for example, 60°C or more), thermal shock (for example, drastic change from -20°C to 80°C), and an alkali detergent.

The average thickness is determined through the following method.

A thickness of the primer layer can be measured by observing a cross section of the anti-fogging and anti-fouling laminate with a field emission scanning electron microscope S-4700 (product name; manufactured by Hitachi High-Technologies Corporation). The measurement is performed at any 10 portions and an average value of the measurements is regarded as an average thickness.

In addition, measurement may be performed with F20 film thickness measurement system manufactured by Filmetrics.

The primer layer can be formed by, for example, coating the active energy ray curable resin composition. That is, the primer layer is a cured product obtained by, for example, curing the active energy ray curable resin composition through active energy rays. The active energy ray curable resin composition is, for example, an active energy ray curable resin composition that includes at least urethane (meth)acrylate and a photopolymerization initiator and further includes other components such as a solvent if necessary.

The urethane (meth)acrylate is not particularly limited and may be appropriately selected depending on the intended purpose. Examples thereof include aliphatic urethane (meth)acrylate and aromatic urethane (meth)acrylate. Among them, aliphatic urethane (meth)acrylate is preferable.

Specific examples of the photopolymerization initiator include specific examples of the photopolymerization initiator that will be exemplified in the description of the anti-fogging and anti-fouling layer below.

Specific examples of the solvent include specific examples of the solvent that will be exemplified in the description of the anti-fogging and anti-fouling layer below.

The active energy ray curable resin composition further preferably includes (meth)acrylate having an ethylene oxide structure. Examples of the (meth)acrylate having an ethylene oxide structure include pentaerythritol ethoxy tetra(meth)acrylate and trimethylolpropane ethoxy tri(meth)acrylate.

A method of the coating is not particularly limited and may be appropriately selected depending on the intended purpose. Examples thereof include wire bar coating, blade coating, spin coating, reverse roll coating, die coating, spray coating, roll coating, gravure coating, microgravure coating, lip coating, air knife coating, curtain coating, a comma coat method, and a dipping method.

### <Anti-fogging and anti-fouling layer>

One aspect of the anti-fogging and anti-fouling layer has the following characteristics.

Pencil hardness of the anti-fogging and anti-fouling layer is 2H or harder.

A coefficient of kinetic friction of the anti-fogging and anti-fouling layer is 0.40 or less.

An average thickness of the anti-fogging and anti-fouling layer is 10 µm or more.

The anti-fogging and anti-fouling layer is a cured product of an active energy ray curable resin composition.

The active energy ray curable resin composition includes a hydrophilic monomer having an alkylene oxide equivalent of 100 or less and an acrylic equivalent of 200 or more but 500 or less, and a hydrophobic monomer including at least one selected from the group consisting of fluorine and silicon.

A content of the hydrophilic monomer in the active energy ray curable resin composition is 55% by mass or more but 90% by mass or less relative to non-volatile matter of the active energy ray curable resin composition.

A content of the hydrophobic monomer in the active energy ray curable resin composition is 0.001% by mass or more but 10% by mass or less relative to the non-volatile matter of the active energy ray curable resin composition.

The active energy ray curable resin composition further includes a UV absorber having no triazine structure and a radical scavenger having a pkb of 9.0 or less.

A content of the UV absorber having no triazine structure in the active energy ray curable resin composition is 0.1% by mass or more but 2.0% by mass or less relative to non-volatile matter of the active energy ray curable resin composition.

A content of the radical scavenger having a pkb of 9.0 or less in the active energy ray curable resin composition is 0.08% by mass or more but 3.0% by mass or less relative to non-volatile matter of the active energy ray curable resin composition.

Another aspect of the anti-fogging and anti-fouling layer has the following characteristics.

Pencil hardness of the anti-fogging and anti-fouling layer is 2H or harder.

A coefficient of kinetic friction of the anti-fogging and anti-fouling layer is 0.40 or less.

An average thickness of the anti-fogging and anti-fouling layer is 10 µm or more.

The anti-fogging and anti-fouling layer is a cured product of an active energy ray curable resin composition.

The active energy ray curable resin composition includes a hydrophilic monomer having an alkylene oxide equivalent of 100 or less and an acrylic equivalent of 200 or more but 500 or less, and a hydrophobic monomer including at least one selected from the group consisting of fluorine and silicon.

A content of the hydrophilic monomer in the active energy ray curable resin composition is 55% by mass or more but 90% by mass or less relative to non-volatile matter of the active energy ray curable resin composition.

A content of the hydrophobic monomer in the active energy ray curable resin composition is 0.001% by mass or more but 10% by mass or less relative to the non-volatile matter of the active energy ray curable resin composition.

The active energy ray curable resin composition further includes a UV absorber having a radical scavenging structure, no triazine structure, and a pkb of 9.0 or less.

A content of the UV absorber having a radical scavenging structure, no triazine structure, and a pkb of 9.0 or less in the active energy ray curable resin composition is 0.1% by mass or more but 2.0% by mass or less relative to non-volatile matter of the active energy ray curable resin composition.

The anti-fogging and anti-fouling layer preferably absorbs 70% or more of near ultraviolet rays having wavelengths of 350 nm or shorter.

The anti-fogging and anti-fouling layer is disposed on the primer layer.

The anti-fogging and anti-fouling layer has a flat surface. Here, the phrase "having a flat surface" means that the surface does not have intentionally formed convex portions or concave portions. For example, regarding the anti-fogging and anti-fouling laminate, when the anti-fogging and anti-fouling layer is formed (when the cured product is formed), fine convex portions or concave portions formed through a physical processing are not formed on the surface.

When the surface of the anti-fogging and anti-fouling layer does not have fine convex portions or concave portions, aqueous stains and/or oily stains (e.g., ink of permanent markers, finger prints, sweat, and cosmetics such as foundation cosmetics and UV protectors) hardly adhere to the surface of the anti-fogging and anti-fouling layer. In addition, even if these stains adhere thereto, the stains can be easily removed with a sheet of tissue paper.

### <<Pencil hardness>>

Pencil hardness is measured according to JIS K 5600-5-4.

The pencil hardness of the anti-fogging and anti-fouling layer is 2H or harder, preferably 2H or harder but 5H or softer, more preferably 2H or harder but 4H or softer. The pencil hardness thereof is H or softer, the scratch resistance becomes insufficient.

### <<Coefficient of kinetic friction>>

The coefficient of kinetic friction is determined through the following method.

The coefficient of kinetic friction is measured with Triboster TS501 (product name; manufactured by Kyowa Interface Science Co., Ltd). BEMCOT (Registered Trademark) M-3II (product name; manufactured by Asahi Kasei Corp.) is attached to a surface contact probe with pieces of double sided tape and the measurement is performed at any 12 portions under the following conditions: a measurement load of 50 g/cm², a measurement speed of 1.7 mm/s, and a measurement distance of 20 mm. An average value of the measurements is regarded as the coefficient of kinetic friction.

The coefficient of kinetic friction of the anti-fogging and anti-fouling layer is 0.40 or less, preferably 0.37 or less, more preferably 0.30 or less. When the coefficient of kinetic friction is 0.40 or less, slipperiness of a material to be wiped is favorable, and the material is easily wiped even when stains are attached thereto. In addition, an effect of releasing a force is achieved, which hardly scratches the anti-fogging and anti-fouling layer.

The lower limit of the coefficient of kinetic friction of the anti-fogging and anti-fouling layer is not particularly limited and may be appropriately selected depending on the intended purpose. However, the coefficient of kinetic friction of the anti-fogging and anti-fouling layer is preferably, for example, 0.10 or more.

### <<Average thickness>>

An average thickness is determined through the following method.

A thickness of the anti-fogging and anti-fouling layer can be measured by observing a cross section of the anti-fogging and anti-fouling laminate with a field emission scanning electron microscope S-4700 (product name; manufactured by Hitachi High-Technologies Corporation). The measurement is performed at any 10 portions and an average value of the measurements is regarded as an average thickness.

In addition, measurement may be performed with F20 film thickness measurement system manufactured by Filmetrics.

In order to suppress cloudiness for a certain time or longer (e.g., 10 minutes or longer) in an atmosphere of high temperature and high humidity conditions (e.g., 35°C and 85% RH), it is effective to set a thickness of the anti-fogging and anti-fouling layer to a certain value or higher.

In terms of the above, an average thickness of the anti-fogging and anti-fouling layer is 10 µm or more, preferably 20 µm or more, more preferably 26 µm or more.

The anti-fogging and anti-fouling layer having a high average thickness does not adversely affect a high resilient property thereof when receiving deformation by pressure applied upon wiping. Therefore, the average thickness thereof is not particularly limited and may be appropriately selected depending on the intended purpose. The upper limit of the average thickness of the anti-fogging and anti-fouling layer is not particularly limited and may be appropriately selected depending on the intended purpose. The average thickness is, for example, 30 µm or less, 40 µm or less, 50 µm or less, and 100 µm or less.

### <<Pure water contact angle>>

A pure water contact angle of the surface of the anti-fogging and anti-fouling layer is preferably 80° or more, more preferably 90° or more, particularly preferably 100° or more. The upper limit of the pure water contact angle is not particularly limited and may be appropriately selected depending on the intended purpose. The pure water contact angle is, for example, 130° or less, 150° or less, and 170° or less.

The pure water contact angle is measured with a contact angle meter: PCA-1 (manufactured by Kyowa Interface Science Co., Ltd) under the following conditions. Distilled water is charged into a plastic syringe and a stainless needle is attached to a tip thereof. Then, the distilled water is added dropwise to a surface to be evaluated (the surface of the anti-fogging and anti-fouling layer).
Amount of water added dropwise: 2 µL
Measurement temperature: 25°C

A contact angle 5 seconds after water is added dropwise is measured at any 10 portions on the surface of the anti-fogging and anti-fouling layer and an average value of the measurements is regarded as the pure water contact angle.

### <<Hexadecane contact angle>>

A hexadecane contact angle of the surface of the anti-fogging and anti-fouling layer is preferably 35° or more, more preferably 40° or more, particularly preferably 60° or more. The upper limit of the hexadecane contact angle is not particularly limited and may be appropriately selected depending on the intended purpose. The pure water contact angle is, for example, 100° or less, 120° or less, and 150° or less.

The hexadecane contact angle is measured with a contact angle meter: PCA-1 (manufactured by Kyowa Interface Science Co., Ltd) under the following conditions. Hexadecane is charged into a plastic syringe and a Teflon-coated stainless needle is attached to a tip thereof. Then, hexadecane is added dropwise to a surface to be evaluated (the surface of the anti-fogging and anti-fouling layer).
Amount of hexadecane added dropwise: 1 µL
Measurement temperature: 25°C

A contact angle 20 seconds after hexadecane is added dropwise is measured at any 10 portions on the surface of the anti-fogging and anti-fouling layer and an average value of the measurements is regarded as the hexadecane contact angle.

In the case where the pure water contact angle falls within the aforementioned preferable ranges and the hexadecane contact angle falls within the aforementioned preferable ranges, even when aqueous stains and/or oily stains (e.g., ink of permanent markers, finger prints, sweat, and cosmetics such as foundation cosmetics and UV protectors) are attached, it is possible to prevent these stains from permeating through under layers of the bulk, resulting in an excellent anti-fouling property as well as an excellent anti-fogging property.

### <<Active energy ray curable resin composition>>

The anti-fogging and anti-fouling layer is a cured product of an active energy ray curable resin composition.

The active energy ray curable resin composition includes a hydrophilic monomer and a hydrophobic monomer, and further includes other components such as a crosslinking agent, a photopolymerization initiator, and a solvent if necessary.

One aspect of the active energy ray curable resin composition further includes a UV absorber having no triazine structure and a radical scavenger having a pkb of 9.0 or less.

Another aspect of the active energy ray curable resin composition further includes a UV absorber having a radical scavenging structure, no triazine structure, and a pkb of 9.0 or less.

### -Hydrophilic monomer-

The hydrophilic monomer has an alkylene oxide equivalent of 100 or less and an acrylic equivalent of 200 or more but 500 or less.

Here, the alkylene oxide equivalent is mass of monomer per 1 mol of the alkylene oxide group and is obtained by dividing a molecular weight of the monomer into the number of alkylene oxides per one molecule of the monomer.

The acrylic equivalent is mass of monomer per 1 mol of the (meth)acrylic group and is obtained by dividing a molecular weight of the monomer into the number of (meth)acrylic groups [may be referred to as (meth)acryloyl group] per one molecule of the monomer.

The number of carbon atoms of the alkylene group in the alkylene oxide is preferably 1 or more but 12 or less, more preferably 1 or more but 4 or less.

Examples of the alkylene oxide include methylene oxide (the number of carbon atoms: 1), 1,2-ethylene oxide (the number of carbon atoms: 2), 1,3-propylene oxide (the number of carbon atoms: 3), 1,2-propylene oxide (the number of carbon atoms: 3), and 1,4-butylene oxide (the number of carbon atoms: 4).

The lower limit of the alkylene oxide equivalent in the hydrophilic monomer is not particularly limited and may be appropriately selected depending on the intended purpose. Examples of the alkylene oxide equivalent include 30 or more and 40 or more.

The hydrophilic monomer includes a (meth)acryloyl group. The number of the (meth)acryloyl groups in the hydrophilic monomer is not particularly limited and may be appropriately selected depending on the intended purpose. However, the number thereof is preferably 2 or more but 6 or less, more preferably 2 or more but 4 or less.

The (meth)acryloyl group means an acryloyl group or a methacryloyl group.

The hydrophilic monomer is not particularly limited and may be appropriately selected depending on the intended purpose so long as it has an alkylene oxide equivalent of 100 or less and an acrylic equivalent of 200 or more but 500 or less. Examples thereof include alkoxylated trimethylolpropane tri(meth)acrylate, alkoxylated glycerin tri(meth)acrylate, alkoxylated pentaerythritol tetra(meth)acrylate, and polyalkylene glycol di(meth)acrylate.

A molecular weight of the hydrophilic monomer is not particularly limited and may be appropriately selected depending on the intended purpose. The molecular weight thereof is preferably 300 or more but 2,500 or less, more preferably 400 or more but 2,000 or less, particularly preferably 600 or more but 1,500 or less.

A content of the hydrophilic monomer in the active energy ray curable resin composition is 55% by mass or more but 90% by mass or less, preferably 60% by mass or more but 80% by mass or less, relative to non-volatile matter of the active energy ray curable resin composition. When the content thereof is less than 55% by mass, the anti-fogging property becomes insufficient. When the content thereof is more than 90% by mass, the scratch resistance becomes insufficient. When the content thereof falls within the preferable range, the anti-fogging and anti-fouling layer is hardly clouded and scratched, and the anti-fogging and anti-fouling layer is hardly attacked by chemicals.

### -Crosslinking agent-

Unlike the hydrophilic monomer, the crosslinking agent has an alkylene oxide equivalent of more than 100. In addition, the crosslinking agent has an acrylic equivalent of less than 400.

In the present invention, a crosslinking agent having no alkylene oxide is included in the crosslinking agent.

The crosslinking agent is, for example, a non-alicyclic crosslinking agent. That is, the crosslinking agent has no alicyclic structure, for example. The alicyclic structure is a ring structure including three or more carbon atoms.

Examples of the alkylene oxide include ethylene oxide and 1,2-propylene oxide.

The lower limit of the acrylic equivalent in the crosslinking agent is not particularly limited and may be appropriately selected depending on the intended purpose. Examples of the acrylic equivalent include 100 or more.

The crosslinking agent includes a (meth)acryloyl group. The number of the (meth)acryloyl groups in the crosslinking agent is not particularly limited and may be appropriately selected depending on the intended purpose. However, the number thereof is preferably 2 or more but 6 or less.

The crosslinking agent is not particularly limited and may be appropriately selected depending on the intended purpose, so long as it has an alkylene oxide equivalent of more than 100 and an acrylic equivalent of less than 400. Examples thereof include pentaerythritol alkoxy tetra(meth)acrylate, aliphatic urethane (urethane)acrylate, and ethoxylated bisphenol-A diacrylate.

A molecular weight of the crosslinking agent is not particularly limited and may be appropriately selected depending on the intended purpose. However, the molecular weight thereof is preferably 300 or more but 2,500 or less, more preferably 400 or more but 2,000 or less, more preferably 500 or more but 1,900 or less.

A content of the crosslinking agent in the active energy ray curable resin composition is preferably 5% by mass or more but 40% by mass or less, more preferably 20% by mass or more but 35% by mass or less, particularly preferably 20% by mass or more but 30% by mass or less, relative to the non-volatile matter of the active energy ray curable resin composition. When the content thereof is less than 5% by mass, scratch resistance and chemical resistance may be deteriorated. When the content thereof is more than 40% by mass, an anti-fogging property may be deteriorated.

Here, some examples of the hydrophilic monomer and the crosslinking agent, alkylene oxide equivalents thereof, and acrylic equivalents thereof will be described below.

**Table 1**

| | Monomer | Molecular weight | Number of AO group per one molecule | Number of acrylic group per one molecule | AO equivalent | Acrylic equivalent |
|---|---|---|---|---|---|---|
| Hydrophilic monomer | SR9035 | 956 | 15 | 3 | 63.7 | 318.7 |
| | ATM-35E | 1892 | 35 | 4 | 54.1 | 473 |
| | A-GLY-20E | 1295 | 20 | 3 | 64.8 | 431.7 |
| | A-600 | 708 | 14 | 2 | 50.6 | 354.0 |
| | A-GLY-9E | 811 | 9 | 3 | 90.1 | 270.3 |
| | A-400 | 508 | 9 | 2 | 56.4 | 254.0 |
| Crosslinking agent | EBECRYL40 | 571 | 4 | 4 | 142.8 | 142.8 |
| | PU610 | 1800 | 0 | 6 | - | 300.0 |
| | ABE-300 | 466 | 3 | 2 | 155.3 | 233.0 |
| Others | A-1000 | 1108 | 23 | 2 | 48.2 | 554.0 |
| | A-DCP | 304 | 0 | 2 | - | 152 |

The "AO" in Table 1 represents alkylene oxide.

Details of the monomers described in Table 1 are as follows.

### [Hydrophilic monomer]

- SR9035: Ethoxylated (15) trimethylolpropane triacrylate, manufactured by SARTOMER
   Note that, (15) means an average number of ethylene oxide groups contained per one mole is 15.
- ATM-35E: Ethoxylated pentaerythritol tetraacrylate, manufactured by Shin Nakamura Chemical Co., Ltd.
- A-GLY-20E: Ethoxylated glycerin triacrylate, manufactured by Shin Nakamura Chemical Co., Ltd.
- A-600: Polyethylene glycol diacrylate, manufactured by Shin Nakamura Chemical Co., Ltd.
- A-GLY-9E: Ethoxylated glycerin triacrylate, manufactured by Shin Nakamura Chemical Co., Ltd.
- A-400: Polyethylene glycol diacrylate, manufactured by Shin Nakamura Chemical Co., Ltd.

### [Crosslinking agent]

- EBECRYL40: Pentaerythritol alkoxy tetraacrylate, manufactured by DAICEL-ALLNEX LTD.
- PU610: Aliphatic urethane acrylate (the numeber of acrylic groups: 6, molecular weight: 1800), manufactured by Miwon
- ABE-300: Ethoxylated bisphenol-A diacrylate, manufactured by Shin Nakamura Chemical Co., Ltd.

### [Others]

- A-1000: Polyethylene glycol diacrylate, manufactured by Shin Nakamura Chemical Co., Ltd.
- A-DCP: Tricyclodecane dimethanol diacrylate, manufactured by Shin Nakamura Chemical Co., Ltd.

### -Hydrophobic monomer-

Unlike the hydrophilic monomer and the crosslinking agent, the hydrophobic monomer includes at least one selected from the group consisting of fluorine and silicon.

In other words, the hydrophobic monomer includes at least one selected from the group consisting of fluorine and silicon, while the hydrophilic monomer and the crosslinking agent include neither fluorine nor silicon.

The hydrophobic monomer includes, for example, a fluoroalkyl group, a fluoroalkyl ether group, and a dimethylsiloxane group.

The hydrophobic monomer includes a (meth)acryloyl group. The number of the (meth)acryloyl groups in the hydrophobic monomer is not particularly limited and may be appropriately selected depending on the intended purpose. However, the number thereof is preferably 2 or more but 6 or less.

Examples of the hydrophobic monomer include fluorinated (meth)acrylate having a fluoroalkyl group or a fluoroalkyl ether group and silicone (meth)acrylate having a dimethylsiloxane group.

Examples of commercially available products of the fluorinated (meth)acrylate include KY-1200 series manufactured by Shin-Etsu Chemical Co., Ltd., MEGAFACE RS series manufactured by DIC CORPORATION, and OPTOOL DAC manufactured by DAIKIN INDUSTRIES, LTD.

Examples of commercially available products of the silicone (meth)acrylate include X-22-164 series manufactured by Shin-Etsu Chemical Co., Ltd. and TEGO Rad series manufactured by Evonik Co.

A molecular weight of the hydrophobic monomer is not particularly limited and may be appropriately selected depending on the intended purpose.

A content of the hydrophobic monomer in the active energy ray curable resin composition is 0.001% by mass or more but 10% by mass or less, preferably 0.001% by mass or more but 5.0% by mass or less, more preferably 0.01% by mass or more but 5.0% by mass or less, further more preferably 0.01% by mass or more but 4.0% by mass or less, particularly preferably 0.01% by mass or more but 1.0% by mass or less, relative to the non-volatile matter of the active energy ray curable resin composition. When the amount thereof is less than 0.001% by mass, the anti-fouling property is deteriorated. When the content thereof is more than 10% by mass, the anti-fogging and anti-fouling layer is deteriorated in appearance (loss of brightness and cloudiness).

### -Photopolymerization initiator-

Examples of the photopolymerization initiator include photoradical polymerization initiators, photo-acid generating agents, bisazido compounds, hexamethoxymethylmelamine, and tetramethoxy glycoluril.

The photoradical polymerization initiator is not particularly limited and may be appropriately selected depending on the intended purpose. Examples thereof are presented as follows.
- 1-Hydroxy-cyclohexyl-phenyl-ketone
- 2-Hydroxy-1-{4-[4-(2-hydroxy-2-methyl-propionyl)-benzil]phenyl}-2-methyl-propan-1-one
- 2,2-Dimethoxy-1,2-diphenylethan-1-one
- 2-Hydroxy-2-methyl-1-phenyl-propan-1-one
- 1-[4-(2-Hydroxy-ethoxy)-phenyl]-2-hydroxy-2-methyl-1-propan-1-one
- Blend of oxy-phenyl-acetic acid 2-[2-oxo-2-phenyl-acetoxy-ethoxy]-ethyl ester and oxy-phenyl-acetic acid 2-[2-hydroxy-ethoxy]-ethyl ester
- 2,4,6-Trimethylbenzoyl-diphenyl-phosphine oxide

The photopolymerization initiator preferably includes no nitrogen atom as a constituent element in order to prevent yellowing in appearance.

Meanwhile, in order to prevent yellowing in appearance, the photopolymerization initiator preferably includes only C, H, and O, or only C, H, P, and O, as constituent elements.

A content of the photopolymerization initiator in the active energy ray curable resin composition is not particularly limited and may be appropriately selected depending on the intended purpose. However, the content thereof is preferably 0.1% by mass or more but 10% by mass or less, more preferably 0.1% by mass or more but 5% by mass or less, particularly preferably 1% by mass or more but 5% by mass or less, relative to non-volatile matter of the active energy ray curable resin composition.

### -UV absorber, radical scavenger, and UV absorber having a radical scavenging structure-

When exposed to ultraviolet rays for a long period of time, a resin generates radicals, so that autooxidation proceeds. As a result, reduction in the molecular weight and crosslinking of the resin causes yellowing, a drop in luster, formation of fissures, and deterioration in physical properties, leading to degradation.

The present inventors extensively studied weatherability of an anti-fogging and anti-fouling laminate, and have found that an anti-fogging and anti-fouling layer easily decreases in hardness when exposed to ultraviolet rays for a long period of time.

Such an anti-fogging and anti-fouling layer includes a polyoxyalkylene group and is considered to easily reduce in the molecular weight thereof due to the crosslinking density lower than a common active energy ray curable hard coat. The surface of the anti-fogging and anti-fouling layer has scratches when wiped for cleaning. Thus, attention should be paid to the applications and places where it is set. It has been found that even in such a system, when the anti-fogging and anti-fouling layer includes a UV absorbing structure and a radical scavenging structure, the above problem can be solved. On the basis of this finding, the present invention has been completed.

### --UV absorbing structure--

The UV absorber and the UV absorber having a radical scavenging structure include a UV absorbing structure.

The UV absorbing structure absorbs ultraviolet rays and converts them to harmless heat.

The amount of ultraviolet rays absorbed by the UV absorbing structure is usually more in a deep layer than in a surface layer of the anti-fogging and anti-fouling layer. Therefore, the UV absorbing structure has a high protective effect for the deep layer.

The UV absorber and the UV absorber having a radical scavenging structure include no triazine structure from the viewpoints of prevention of deterioration in compatibility, prevention of deterioration in appearance after exposure to ultraviolet rays, and prevention of color change.

Examples of the UV absorbing structure include benzophenone structures, benzotriazole structures, benzoate structures, benzoxazinone structures, cyanoacrylate structures, benzoxazole structures, merocyanine structures, salicylate structures, formamidine structures, and oxanilide structures.

One example of the benzotriazole structures is represented by, for example, the following structural formula.

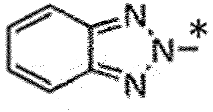

In the structural formula, "*" denotes a binding site.

Examples of the UV absorber include benzophenone-based compounds, benzotriazole-based compounds, benzoate-based compounds, benzoxazinone-based compounds, cyanoacrylate-based compounds, benzoxazole-based compounds, merocyanine-based compounds, salicylate-based compounds, formamidine-based compounds, and oxanilide-based compounds.

The UV absorber may be a commercially available product. Examples of the commercially available product include Tinuvin series, Chimassorb series, and Uvinul series, which are manufactured by BASF, ADEKA STAB LA series manufactured by ADEKA, CHEMISORB series manufacture by CHEMIPRO KASEI KAISHA, LTD., SEESORB series manufacture by SHIPRO KASEI KAISHA, LTD., and benzotriazole-based compounds manufactured by JOHOKU CHEMICAL CO., LTD.

In choosing the UV absorber, it is preferable to appropriately select one that has good compatibility with the other ingredients and does not inhibit adhesiveness in order to suppress deterioration in appearance due to bleed-out and decrease in UV absorbing ability.

The UV absorber and the UV absorbing structure preferably have an absorption peak in the so-called UVA wavelength band (315 nm to 400 nm).

The UV absorber is a benzotriazole-based compound from the viewpoint of compatibility with the other ingredients in the anti-fogging and anti-fouling layer.

### --Radical scavenging structure--

The radical scavenger and the UV absorber having a radical scavenging structure include a radical scavenging structure.

The radical scavenging structure re-combines with radicals, then changes them to harmless ketones and alcohols, and returns to the original structure. The radical scavenging structure repeats this reaction.

The radical scavenging structure similarly functions also in the surface layer regardless of the thickness direction of the anti-fogging and anti-fouling layer.

Examples of the radical scavenging structure include amine structures, phenol structures, and benzoate structures.

From the viewpoints of the ability to suppress the occurrences of color change, fractures, and cracks after the exposure to ultraviolet rays derived from radical scavenging performances, and of good compatibility with the other ingredients in the active energy ray curable resin composition, the radical scavenger is preferably a basic compound, more preferably has a base dissociation constant pkb value of 9.0 or less, particularly preferably a secondary or tertiary amine compound having a base dissociation constant pkb value of 9.0 or less. This is true of the UV absorber having a radical scavenging structure.

When the pkb value is 9.0 or less, the pkb value may be, for example, 3.0 or more but 7.0 or less, or 4.0 or more but 6.0 or less.

The radical scavenging structure contained in the basic compound is, for example, the following hindered structures having a piperidine ring.

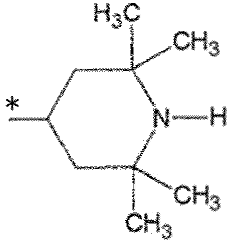

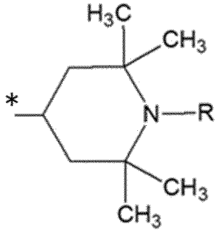

In the structural formulas, "*" denotes a binding site. R denotes an alkyl group having 1 to 6 carbon atoms. The alkyl group may have a linear structure or a branched structure.

Examples of the phenol structure include hindered phenol structures.

In the present invention, the hindered phenol structures include semi hindered phenol structures and less hindered phenol structures.

One of the hindered phenol structures is expressed by the following structural formula.

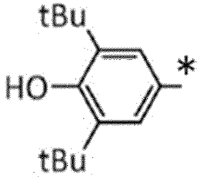

In the structural formula, "*" denotes a binding site. "tBu" denotes a tert-butyl group.

One of the semi hindered phenol structures is expressed by the following structural formula.

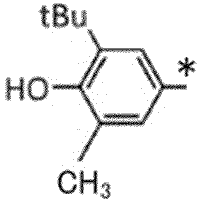

In the structural formula, "*" denotes a binding site. "tBu" denotes a tert-butyl group.

One of the less hindered phenol structures is expressed by the following structural formula.

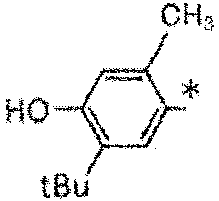

In the structural formula, "*" denotes a binding site. "tBu" denotes a tert-butyl group.

Examples of the radical scavenger include amine-based compounds, phenol-based compounds, and benzoate-based compounds.

The radical scavenger may be a commercially available product. Examples of the commercially available product include Tinuvin series and Chimassorb series, which are manufactured by BASF, ADEKA STAB LA series manufactured by ADEKA, CHEMISORB series, CHEMISTAB series, and CHEMINOX series, which are manufacture by CHEMIPRO KASEI KAISHA, LTD., SEESORB series manufacture by SHIPRO KASEI KAISHA, LTD., and benzotriazole-based compounds manufactured by JOHOKU CHEMICAL CO., LTD.

In choosing the radical scavenger, it is preferable to appropriately select one that has good compatibility with the other ingredients and does not inhibit coat adhesiveness in order to suppress deterioration in appearance due to bleed-out and decrease in radical scavenging ability.

A specific example of the radical scavenger is given below.
- Tinuvin292: manufactured by BASF, pkb=5.0,
   70-80%bis(1,2,2,6,6-pentamethyl-4-piperidyl)sebacate
   20-30% methyl 1,2,2,6,6-pentamethyl-4-piperidylsebacate

### [Bis(1,2,2,6,6,-pentamethyl-4-piperidyl)=decanedioate]

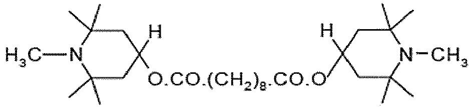

This radical scavenger (Tinuvin292) has a hindered amine structure.
- Tinuvin144: manufactured by BASF, pkb=5.3, Bis(1,2,2,6,6-pentamethyl-4-piperidyl)[[3,5-bis(1,1-dimethylethyl)-4-hydroxyphenyl]methyl]butyl malonate

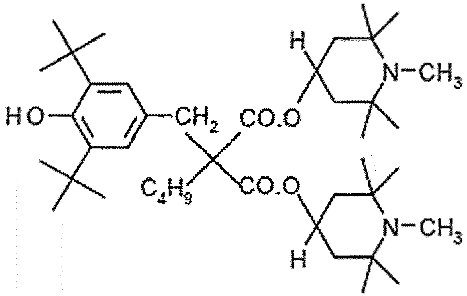

This radical scavenger (Tinuvin144) has a hindered amine structure and a hindered phenol structure.

Specific examples of the UV absorber having a radical scavenging structure and no triazine structure are given below.
- JAST-500: pkb=5.99, 6-(2-benzotriazoryl)-4-tert-octyl-6'-tert-butyl-4'-methyl-2,2'-methylene bisphenol, manufactured by JOHOKU CHEMICAL CO., LTD.

### [Benzotriazole-based] UV absorber having a radical scavenging structure

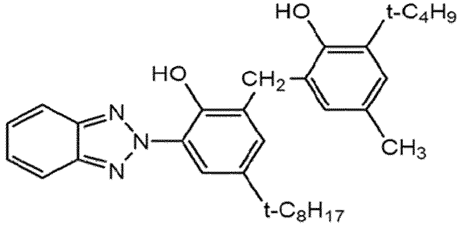

This UV absorber having a radical scavenging structure (JAST-500) has a semi hindered phenol structure having a radical scavenging ability next to the benzotriazole structure having UV absorbing ability.

The UV absorber, the radical scavenger, and the UV absorber having a radical scavenging structure preferably include a (meth)acrylate group in the molecular structure thereof because they are united with a matrix upon curing of the active energy ray curable resin composition to suppress bleed-out.

A content of the UV absorber having no triazine structure in the active energy ray curable resin composition is 0.1% by mass or more but 2.0% by mass or less, preferably 0.3% by mass or more but 2.0% by mass or less, more preferably 0.5% by mass or more but 2.0% by mass or less, relative to non-volatile matter of the active energy ray curable resin composition. When the content thereof is less than 0.1% by mass, the obtained UV absorbing effect is low to cause reductions in adhesiveness and hardness of the anti-fogging and anti-fouling layer after the exposure to ultraviolet rays, and further cause color change of the anti-fogging and anti-fouling layer after the exposure to ultraviolet rays. When the content thereof is more than 2.0% by mass, bleed-out occurs after the exposure to ultraviolet rays.

A content of the radical scavenger having a pkb of 9.0 or less in the active energy ray curable resin composition is 0.08% by mass or more but 3.0% by mass or less, preferably 0.08% by mass or more but 2.0% by mass or less, more preferably 0.10% by mass or more but 1.0% by mass or less, particularly preferably 0.10% by mass or more but 0.50% by mass or less, relative to non-volatile matter of the active energy ray curable resin composition. When the content thereof is less than 0.08% by mass, the obtained radical scavenging effect is low to cause reductions in adhesiveness and hardness of the anti-fogging and anti-fouling layer after the exposure to ultraviolet rays, and further cause color change of the anti-fogging and anti-fouling layer after the exposure to ultraviolet rays. When the content thereof is more than 3.0% by mass, bleed-out occurs after the exposure to ultraviolet rays.

A content of the UV absorber having a radical scavenging structure, no triazine structure, and a pkb of 9.0 or less in the active energy ray curable resin composition is 0.1% by mass or more but 2.0% by mass or less, preferably 0.3% by mass or more but 2.0% by mass or less, more preferably 0.5% by mass or more but 2.0% by mass or less, relative to non-volatile matter of the active energy ray curable resin composition. When the content thereof is less than 0.1% by mass, the obtained UV absorbing effect is low to cause reductions in adhesiveness and hardness of the anti-fogging and anti-fouling layer after the exposure to ultraviolet rays, and further cause color change of the anti-fogging and anti-fouling layer after the exposure to ultraviolet rays. When the content thereof is more than 2.0% by mass, bleed-out occurs after the exposure to ultraviolet rays.

### -Solvent-

The solvent is not particularly limited and may be appropriately selected depending on the intended purpose. Examples thereof include organic solvents.

Examples of the organic solvent include aromatic solvents, alcohol solvents, ester solvents, ketone solvents, glycol ether solvents, glycol ether ester solvents, chlorine solvents, ether solvents, N-methylpyrrolidone, dimethylformamide, dimethylsulfoxide, and dimethylacetamide.

As the solvent, a solvent having a boiling point of 80°C or more is preferable for the purpose of obtaining an anti-fogging and anti-fouling layer having more excellent appearance.

Examples of the solvent having a boiling point of 80°C or more include 1-propanol, 2-propanol, 1-butanol, 2-butanol, 2-methyl-2-propanol, 1,3-butanediol, 1,4-butanediol, 2-ethyl-1-hexanol, n-propyl acetate, isopropyl acetate, butyl acetate, methyl isobutyl ketone, cyclohexanone, diisobutyl ketone, diacetone alcohol, propylene glycol monomethylether, methyl cellosolve, ethyl cellosolve, butyl cellosolve, 1,4-dioxane, methyl carbitol, ethyl carbitol, butyl carbitol, ethyl carbitol acetate, and butyl carbitol acetate.

A content of the solvent in the active energy ray curable resin composition is not particularly limited and may be appropriately selected depending on the intended purpose.

The active energy ray curable resin composition may contain a metal oxide filler such as silica, zirconia, and alumina to increase the hardness of the anti-fogging and anti-fouling layer.

A content of the metal oxide filler in the active energy ray curable resin composition is not particularly limited and may be appropriately selected depending on the intended purpose.

The active energy ray curable resin composition is cured by irradiation of active energy rays. The active energy rays are not particularly limited and may be appropriately selected depending on the intended purpose. Examples thereof include electron beams, UV rays, infrared rays, laser beams, visible rays, ionizing radiation (e.g., X rays, α rays, β rays, γ rays), microwave, and high-frequency wave.

When the active energy ray curable resin composition includes the hydrophobic monomer and the hydrophilic monomer, the low-surface-energy components are localized on the surface of the anti-fogging and anti-fouling layer obtained, and the hydrophilic components (water-absorbable components) are present inside the anti-fogging and anti-fouling layer. As a result, water droplets are easily repelled on the surface of the anti-fogging and anti-fouling layer, and water vapor is easily trapped inside the anti-fogging and anti-fouling layer, which makes it possible to achieve more excellent anti-fogging property.

A method for producing the anti-fogging and anti-fouling laminate is not particularly limited and may be appropriately selected depending on the intended purpose. The anti-fogging and anti-fouling layer is preferably obtained by irradiating an uncured layer formed of the active energy ray curable resin composition with ultraviolet rays under an atmosphere having an oxygen concentration of less than 1.0% by volume. This makes the curing ability excellent. As a result, an anti-fogging and anti-fouling layer having a low coefficient of kinetic friction and a high contact angle can be obtained.

Examples of the atmosphere having an oxygen concentration of less than 1.0% by volume include inert gas atmospheres such as nitrogen atmosphere.

Here, one example of the anti-fogging and anti-fouling laminate will be described.

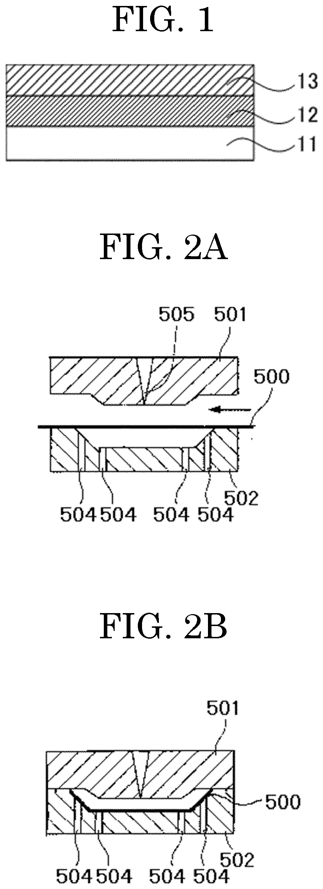

FIG. 1 is a schematic cross-sectional view of one example of the anti-fogging and anti-fouling laminate of the present invention.

The anti-fogging and anti-fouling laminate of FIG. 1 includes a substrate made of a resin 11, a primer layer 12, and an anti-fogging and anti-fouling layer 13.

### (Method for producing anti-fogging and anti-fouling laminate)

A method of the present invention for producing an anti-fogging and anti-fouling laminate includes at least an anti-fogging and anti-fouling layer forming step, preferably includes a primer layer forming step, and further includes other steps if necessary.

The method for producing an anti-fogging and anti-fouling laminate is a suitable method of the present invention for producing the anti-fogging and anti-fouling laminate.

### <Primer layer forming step>

The primer layer forming step is not particularly limited and may be appropriately selected depending on the intended purpose, so long as it is a step of forming the primer layer. Examples thereof include a step of coating, on the substrate, an active energy ray curable resin composition for forming a primer layer and irradiating it with ultraviolet rays, to form the primer layer.

### <Anti-fogging and anti-fouling layer forming step>

The anti-fogging and anti-fouling layer forming step is not particularly limited and may be appropriately selected depending on the intended purpose, so long as it is a step of irradiating, with ultraviolet rays, un uncured layer formed of the active energy ray curable resin composition on the primer layer under an atmosphere having an oxygen concentration of less than 1.0% by volume, to form the anti-fogging and anti-fouling layer.

By performing irradiation of ultraviolet rays under the atmosphere having an oxygen concentration of less than 1.0% by volume when the anti-fogging and anti-fouling layer is formed, the curing ability becomes excellent. As a result, an anti-fogging and anti-fouling layer having a low coefficient of kinetic friction and a high contact angle can be obtained.

Examples of the atmosphere having an oxygen concentration of less than 1.0% by volume include inert gas atmospheres such as nitrogen atmosphere.

### (Active energy ray curable resin composition)

An active energy ray curable resin composition of the present invention includes at least a hydrophilic monomer, a hydrophobic monomer, and a photopolymerization initiator, and further includes other components such as a crosslinking agent and a solvent if necessary.

One aspect of the active energy ray curable resin composition includes a UV absorber and a radical scavenger.

Another aspect of the active energy ray curable resin composition includes a UV absorber having a radical scavenging structure.

Details of the hydrophilic monomer, the hydrophobic monomer, the crosslinking agent, the photopolymerization initiator, the solvent, the UV absorber, the radical scavenger, and the UV absorber having a radical scavenging structure are the same as the details of the hydrophilic monomer, the hydrophobic monomer, the crosslinking agent, the photopolymerization initiator, the solvent, and the UV absorber, the radical scavenger, and the UV absorber having a radical scavenging structure in the description of the anti-fogging and anti-fouling layer of the anti-fogging and anti-fouling laminate. In addition, preferable embodiments thereof are the same as well.

A surface of an anti-fogging and anti-fouling layer having a flat surface, which is obtained by curing the active energy ray curable resin composition through active energy rays, preferably has pencil hardness of 2H or harder.

The surface of the anti-fogging and anti-fouling layer preferably has a coefficient of kinetic friction of 0.40 or less.

The surface of the anti-fogging and anti-fouling layer preferably has a pure water contact angle of 80° or more and preferably has a hexadecane contact angle of 35° or more.

Measurement methods and preferable ranges of the pencil hardness, the coefficient of kinetic friction, the pure water contact angle, and the hexadecane contact angle are the same as the measurement methods and preferable ranges in the description of the anti-fogging and anti-fouling layer.

### (Product)

A product of the present invention includes the anti-fogging and anti-fouling laminate of the present invention on a surface thereof and further includes other members if necessary.

The product is not particularly limited and may be appropriately selected depending on the intended purpose. Examples thereof include glass windows, refrigerating/freezing show cases, partitions, window materials for automobile windows, bath mirrors, mirrors such as automobile side mirrors, floors and walls of bath rooms, solar battery panels, and crime prevention monitoring cameras.

The product may be a pair of glasses, goggles, helmets, lenses, microlens arrays, and headlight covers, front panels, side panels, and rear panels of automobiles. These are preferably formed by in-mold forming, insert molding, or overlay molding.

The anti-fogging and anti-fouling laminate may be formed on a part or the whole of the surface of the product.

A method for producing the product is not particularly limited and may be appropriately selected depending on the intended purpose. However, the method for producing the product of the present invention that will be described later is preferable.

### (Method for producing product)

The method for producing the product of the present invention includes at least a heating step, and an anti-fogging and anti-fouling laminate molding step, and further includes other steps (injection molding step, cast molding step, etc.) if necessary.

The method for producing the product is the method for producing the product of the present invention.

### <Heating step>

The heating step is not particularly limited and may be appropriately selected depending on the intended purpose so long as it is a step of heating an anti-fogging and anti-fouling laminate.

The anti-fogging and anti-fouling laminate is the anti-fogging and anti-fouling laminate of the present invention.

The heating is not particularly limited and may be appropriately selected depending on the intended purpose. However, heating through infrared rays or exposure to a high temperature atmosphere is preferable.

A temperature of the heating is not particularly limited and may be appropriately selected depending on the intended purpose. However, the temperature of the heating is preferably near a glass transition temperature of the substrate made of a resin or the glass transition temperature or higher.

The heating time is not particularly limited and may be appropriately selected depending on the intended purpose.

### <Anti-fogging and anti-fouling laminate molding step>

The anti-fogging and anti-fouling laminate molding step is not particularly limited and may be appropriately selected depending on the intended purpose so long as it is a step of molding the heated anti-fogging and anti-fouling laminate into a desired shape. The anti-fogging and anti-fouling laminate molding step is, for example, a step of bringing the laminate into contact with a predetermined mold and molding the laminate into a desired shape by application of air pressure.

### <Injection molding step>

After the anti-fogging and anti-fouling laminate molding step, an injection molding step may be performed if necessary.

The injection molding step is not particularly limited and may be appropriately selected depending on the intended purpose so long as it is a step of injecting a molding material onto a substrate made of a resin of the anti-fogging and anti-fouling laminate molded into a desired shape and molding the molding material.

Examples of the molding material include resins. Examples of the resin include olefin resins, styrene resins, ABS resins (acrylonitrile-butadiene-styrene copolymers), AS resins (acrylonitrile-styrene copolymers), acrylic resins, urethane resins, unsaturated polyester resins, epoxy resins, polyphenylene oxide/polystyrene resins, polycarbonates, polycarbonate-modified polyphenylene ethers, polyethylene terephthalates, polysulfones, polyphenylene sulfides, polyphenylene oxides, polyetherimides, polyimides, polyamides, liquid crystal polyesters, polyallyl heat-resistant resins, various types of complex resins, and various types of modified resins.

A method of the injection is not particularly limited and may be appropriately selected depending on the intended purpose. Examples of the method of the injection include a method by injecting the molten molding material to a substrate made of a resin of the anti-fogging and anti-fouling laminate that has closely adhered to a predetermined die.

### <Cast molding step>

After the anti-fogging and anti-fouling laminate molding step, a cast molding step may be performed if necessary.

The cast molding step is not particularly limited and may be appropriately selected depending on the intended purpose, so long as it is the following step. That is, resin materials dissolved in a solution are charged into a side of the substrate made of a resin of the anti-fogging and anti-fouling laminate, which is molded into a desired shape. Then, the resin materials are solidified to perform the molding.

The method for producing the product is preferably performed by use of an in-mold forming apparatus, an insert-molding apparatus, or an overlay molding apparatus.

Here, an example of the method for producing the product of the present invention will be described with reference to the accompanying drawings. The production method is a production method using an in-mold forming apparatus.

First, an anti-fogging and anti-fouling laminate 500 is heated. The heating is preferably performed by heating through infrared rays or exposure to a high temperature atmosphere.

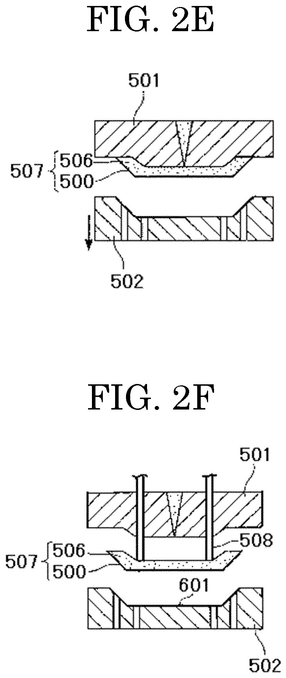

Then, as illustrated in FIG. 2A, the anti-fogging and anti-fouling laminate 500 heated is disposed at a predetermined position between a first mold 501 and a second mold 502 in such a manner that the substrate made of a resin of the anti-fogging and anti-fouling laminate 500 faces the first mold 501 and the anti-fogging and anti-fouling layer faces the second mold 502. In FIG. 2A, the first mold 501 is immovable, while the second mold 502 is movable.

After the anti-fogging and anti-fouling laminate 500 is disposed between the first mold 501 and the second mold 502, the first mold 501 and the second mold 502 are clamped. Subsequently, the anti-fogging and anti-fouling laminate 500 is attracted to a suction hole 504 opened in a cavity surface of the second mold 502 to fit the anti-fogging and anti-fouling laminate 500 along the cavity surface of the second mold 502. In this manner, the anti-fogging and anti-fouling laminate 500 is shaped on the cavity surface. At this time, the periphery of the anti-fogging and anti-fouling laminate 500 may be immobilized by a film pressor mechanism (not illustrated) to thereby perform positioning. Thereafter, unnecessary portions of the anti-fogging and anti-fouling laminate 500 are trimmed off (FIG. 2B).

Note that, when the second mold 502 has no suction hole 504 and the first mold 501 has a compressed air hole (not illustrated), compressed air is fed through the compressed air hole of the first mold 501 toward the anti-fogging and anti-fouling laminate 500 to fit the anti-fogging and anti-fouling laminate 500 along the cavity surface of the second mold 502.

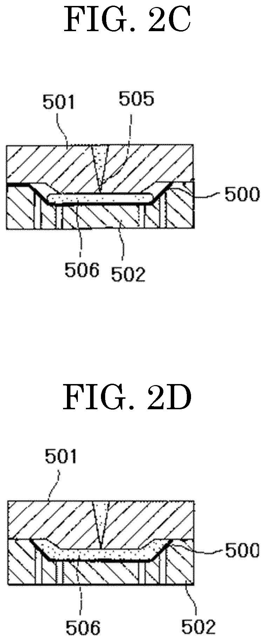

Subsequently, toward the substrate made of a resin of the anti-fogging and anti-fouling laminate 500, a molten molding material 506 is injected from a gate 505 of the first mold 501 and is injected into the cavity that is formed by clamping the first mold 501 and the second mold 502 (FIG. 2C). In this manner, the cavity is filled with the molten molding material 506 (FIG. 2D). After completion of filling the molten molding material 506, the molten molding material 506 is cooled to a predetermined temperature and is solidified.

Thereafter, the second mold 502 is moved to separate the first mold 501 and the second mold 502 (FIG. 2E). In this manner, the anti-fogging and anti-fouling laminate 500 is formed on the surface of the molding material 506 and a product 507 molded into a desired shape by in-mold forming can be obtained.

Finally, the obtained product 507 is pushed out by ejection pins 508 from the first mold 501 to remove the product 507.

The production method using the overlay molding apparatus is as follows. This is a process of directly decorating the anti-fogging and anti-fouling laminate on the surface of a molding material. One example thereof is, for example, TOM (three dimension overlay method). Next, one example of the method for producing the product of the present invention using the TOM will be described below.

First, in both spaces of an apparatus that are partitioned by the anti-fogging and anti-fouling laminate fixed on a fixing frame, air is suctioned by, for example, a vacuum pump to perform vacuum drawing in the both spaces.

At this time, a molding material previously formed by injection molding is placed in one of the spaces. At the same time, the anti-fogging and anti-fouling laminate is heated with an infrared heater until the temperature reaches a predetermined temperature at which the anti-fogging and anti-fouling laminate is softened. At the timing when the anti-fogging and anti-fouling laminate is heated to be soften, the anti-fogging and anti-fouling laminate is allowed to closely adhere to the three dimensional shape of the molding material under a vacuum atmosphere by feeding air into the space of the apparatus where there is no molding material. If necessary, pressing with compressed air from a side where the air is fed may be further used in combination. After the anti-fogging and anti-fouling laminate is allowed to closely adhere to the molding product, the resultant decorated molding product is removed from the fixing frame. This vacuum molding is performed generally at 80°C or more but 200°C or less, preferably at about 110°C or more but about 160°C or less.

Upon overlay molding, in order to achieve adhesion between the anti-fogging and anti-fouling laminate and the molding material, an adhesive layer may be provided on a surface opposite to the surface of the anti-fogging and anti-fouling layer of the anti-fogging and anti-fouling laminate. The adhesive layer is not particularly limited and may be appropriately selected depending on the intended purpose. Examples of the adhesive layer include acrylic adhesive agents and hotmelt adhesive agents. A method for forming the adhesive layer is not particularly limited and may be appropriately selected depending on the intended purpose. Examples thereof include a method for forming the adhesive layer by forming the anti-fogging and anti-fouling layer on the substrate made of a resin and then coating a coating liquid for the adhesive layer at a side opposite to the side of the anti-fogging and anti-fouling layer of the anti-fogging and anti-fouling laminate. In addition, the adhesive layer may be laminated on the substrate made of a resin by coating a coating liquid for the adhesive layer on an exfoliation sheet to form the adhesive layer and then laminating the substrate made of a resin and the adhesive layer on the exfoliation sheet.

Here, an example of the product of the present invention will be described with reference to the drawings.

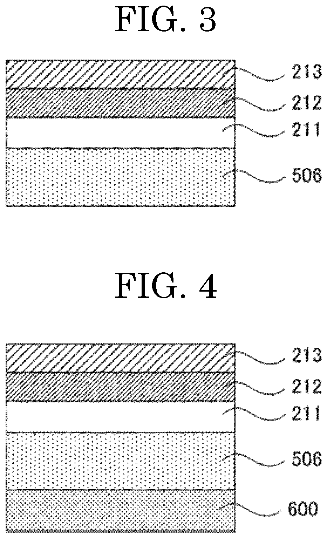

FIG. 3 to FIG. 6 are each a schematic cross-sectional view of an example of the product of the present invention.

The product of FIG. 3 includes a molding material 506, a substrate made of a resin 211, a primer layer 212, and an anti-fogging and anti-fouling layer 213, where the substrate made of a resin 211, the primer layer 212, and the anti-fogging and anti-fouling layer 213 are laminated on the molding material 506 in this order.

This product can be produced by, for example, insert molding.

The product of FIG. 4 includes a molding material 506, a substrate made of a resin 211, a primer layer 212, an anti-fogging and anti-fouling layer 213, and a hard coat layer 600, where the substrate made of a resin 211, the primer layer 212, and the anti-fogging and anti-fouling layer 213 are laminated on the molding material 506 in this order. The hard coat layer 600 is formed at a side of the molding material 506 opposite to the side of the molding material 506 at which the substrate made of a resin 211 is laminated.

This product can be produced by the following method. Specifically, after the product of FIG. 3 is produced, a protective layer is formed on the anti-fogging and anti-fouling layer 213. Then, the hard coat layer 600 is formed on a surface of the molding material 506 by immersing the molding material 506 in a hard coat solution and then drying and coating it. Moreover, the protective layer is exfoliated to form the product of FIG. 4. Note that, when the anti-fogging and anti-fouling layer has a flat surface and has both a pure water contact angle of more than 80° and a hexadecane contact angle of more than 35°, the anti-fogging and anti-fouling layer repels the hard coat solution. Therefore, the hard coat is not formed on the anti-fogging and anti-fouling layer even when the protective layer is not formed thereon. Then, the hard coat layer 600 is formed only on a side of the molding material 506 opposite to the side of the molding material 506 at which the substrate made of a resin 211 is laminated. As a result, the product is excellent in productivity.

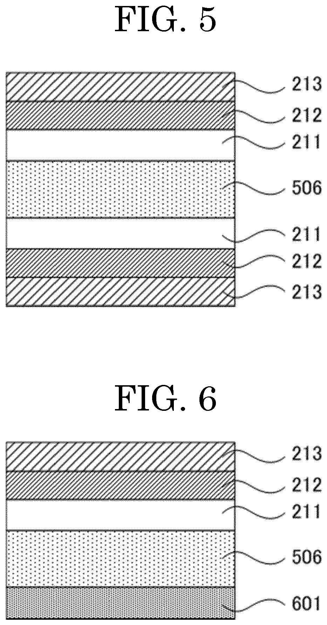

The product of FIG. 5 includes a molding material 506, substrates made of a resin 211, primer layers 212, and anti-fogging and anti-fouling layers 213, where each of the substrates made of a resin 211, each of the primer layers 212, and each of the anti-fogging and anti-fouling layers 213 are laminated on both sides of the molding material 506 in this order.

The product of FIG. 6 includes a molding material 506, a substrate made of a resin 211, a primer layer 212, an anti-fogging and anti-fouling layer 213, and an optical film 601, where the substrate made of a resin 211, the primer layer 212, the anti-fogging and anti-fouling layer 213 are laminated on the molding material 506 in this order. The optical film 601 is formed at a side of the molding material 506 opposite to the side of the molding material 506 at which the substrate made of a resin 211 is laminated. Examples of the optical film 601 include a hard coat film, an anti-reflection film, an anti-glare film, and a polarizing film.

The product illustrated in FIG. 5 or FIG. 6 can be produced by, for example, double insert molding. The double insert molding is a method for molding an integrated product where films are laminated on both surfaces, and can be performed using, for example, the method described in Japanese Patent Application Laid-Open No. 03-114718.

### (Anti-fogging method)

### <Anti-fogging method (part 1)>

One aspect of an anti-fogging method of the present invention is an anti-fogging method for improving an anti-fogging property of the anti-fogging and anti-fouling layer by warming the anti-fogging and anti-fouling laminate of the present invention to a temperature equal to or higher than normal temperature.

By warming the anti-fogging and anti-fouling layer to a temperature equal to or higher than normal temperature, a fogging property is improved, and cloudiness of the anti-fogging and anti-fouling layer can be prevented for a certain time or longer.

It is believed that the reason why the anti-fogging property is improved through warming is because the warming suppresses condensation on the surface of the anti-fogging and anti-fouling layer and moisture is effectively repeatedly absorbed and released.

Examples of the method of the warming include a method by maintaining an atmosphere to 30°C or more and a method by applying hot water of 30°C or more to the anti-fogging and anti-fouling layer.

### <Anti-fogging method (part 2)>

Another aspect of the anti-fogging method of the present invention is an anti-fogging method for maintaining an anti-fogging property of the anti-fogging and anti-fouling layer, by cleaning the anti-fogging and anti-fouling layer of the anti-fogging and anti-fouling laminate of the present invention.

When water scale or oily stains are attached on the surface of the anti-fogging and anti-fouling layer, the anti-fogging property is deteriorated. Therefore, by cleaning the anti-fogging and anti-fouling layer, the anti-fogging property of the anti-fogging and anti-fouling layer can be maintained.

A method of the cleaning is not particularly limited and may be appropriately selected depending on the intended purpose. Examples thereof include a method of the cleaning by wiping it with a sponge. Examples of the sponge include commercially available urethane sponges and melamine sponges. When the sponge is used for the wiping, the sponge may be wetted with tap water or a detergent (e.g., commercially available neutral detergents, alkaline detergents, and acidic detergents) may be applied to the sponge.

### Examples

The present invention will be described below by way of Examples. However, the present invention should not be construed as being limited to these Examples.

### <Average thickness>

Thicknesses of the anti-fogging and anti-fouling layer, and the primer layer were measured by observing a cross section of the anti-fogging and anti-fouling laminate with a field emission scanning electron microscope S-4700 (product name: manufactured by Hitachi High-Technologies Corporation). The measurement was performed at any 10 portions and an average value of the measurements was regarded as an average thickness.

### <Appearance>

Appearance was visually observed and was evaluated in the following evaluation criteria.

### [Evaluation criteria]

A: The surface was colorless, transparent, and clear.
B: Loss of brightness, yellowing, or unevenness was observed.

### <Anti-fogging property>

After left to stand for 2 hours under an environment of normal temperature, the anti-fogging and anti-fouling laminate was exposed to a high temperature and high humidity environment of 35°C and 85% RH for 15 minutes. The surface of the anti-fogging and anti-fouling laminate was visually observed during exposure to the high temperature and high humidity environment and was evaluated for the anti-fogging property based on evaluation criteria below.

### [Evaluation criteria]

A: Until 10 minutes after, an area having poor visibility due to fogging and water droplets was 30% or less.
B: Until 5 minutes after, an area having poor visibility due to fogging and water droplets was 30% or less.
C: In 5 minutes after, an area having poor visibility due to fogging and water droplets was more than 30%.

### <Anti-fouling property>

The surface of the anti-fogging and anti-fouling layer was made dirty with Sharpie PROFESSIONAL (black permanent marker, product name, manufactured by Newell Rubbermaid). After the surface was wiped with a sheet of tissue paper (ELLEAIR, manufactured by Daio Paper Corporation) 10 times so that a circle was drawn, the surface was visually observed. Then, the evaluation was performed based on the following evaluation criteria.

### [Evaluation criteria]

A: The surface favorably repelled the permanent marker, and stain disappeared by wiping it 2 to 5 times.
B: The surface weakly repelled the permanent marker, and stain disappeared by wiping it 6 to 10 times.
C: The surface did not repel the permanent marker, and stain remained even after the surface was wiped 10 times.

### <Pure water contact angle>

The pure water contact angle was measured with a contact angle meter, PCA-1 (manufactured by Kyowa Interface Science Co., Ltd.) under the following conditions. Distillation water was charged into a plastic syringe. To the tip of the syringe, a stainless steel needle was attached. The distillation water was added dropwise to a surface to be evaluated (surface of the anti-fogging and anti-fouling layer).
The amount of water added dropwise: 2 µL
The measurement temperature: 25°C

A contact angle 5 seconds after water was added dropwise was measured at any 10 portions on the surface of the anti-fogging and anti-fouling layer and an average value of the measurements was regarded as the pure water contact angle.

### <Hexadecane contact angle>

The hexadecane contact angle was measured with a contact angle meter, PCA-1 (manufactured by Kyowa Interface Science Co., Ltd.) under the following conditions. Hexadecane was charged into a plastic syringe. To the tip of the syringe, a TEFLON coated stainless steel needle was attached. The hexadecane was added dropwise to a surface to be evaluated (surface of the anti-fogging and anti-fouling layer).
The amount of hexadecane added dropwise: 1 µL
The measurement temperature: 25°C

A contact angle 20 seconds after hexadecane was added dropwise was measured at any 10 portions on the surface of the anti-fogging and anti-fouling layer and an average value of the measurements was regarded as the hexadecane contact angle.

### <Coefficient of kinetic friction>

Triboster TS501 (product name; manufactured by Kyowa Interface Science Co., Ltd) was used for measurement. BEMCOT (Registered Trademark) M-3II (product name; manufactured by Asahi Kasei Corp.) was attached to a surface contact probe with pieces of double sided tape and the measurement was performed at any 12 portions under the following conditions: a measurement load of 50 g/cm², a measurement speed of 1.7 mm/s, and a measurement distance of 20 mm. An average value of the measurements was regarded as the coefficient of kinetic friction.

### <Coat adhesiveness>

The anti-fogging and anti-fouling laminates were subjected to environments described below and were each subjected to a cross-cut tape test according to JIS K5400. Then, coat adhesiveness was evaluated based on evaluation criteria below.

### [Exposure conditions]

1: The anti-fogging and anti-fouling laminate was exposed to vapor generated from hot water of 80°C for 5 minutes.
2: The anti-fogging and anti-fouling laminate was immersed in Mold Killer (product name, for removing mold in a bathroom, manufactured by Johnson Company) for 1 hour.

### [Evaluation criteria]

A: Peeling was not found under both conditions.
B: Peeling was found under one or more conditions.

### <Pencil hardness>

Pencil hardness was measured according to JIS K 5600-5-4.

### <Scratch resistance>

A melamine sponge (product name: GEKIOCHI KUN) wetted with tap water was placed on the surface of the anti-fogging and anti-fouling layer, and was reciprocated and slid 10,000 times at a load of 300 gf/cm² (reciprocating stroke: 3 cm; and reciprocating and sliding speed: 6 cm/s). Then, the scratch resistance was evaluated based on evaluation criteria below.

### [Evaluation criteria]

A: There was no change in appearance such as a scratch or white cloudiness.
B: There was a change in appearance such as a scratch or white cloudiness.

### <Reflectance>

Spectrophotometer UH4150 manufactured by Hitachi High-Tech Science Corporation was used to measure a regular reflectance spectrum at an incident angle of 5° in the range of from 270 to 800 nm. The reflectance at 350 nm is presented in the table.

### <Appearance after exposure to ultraviolet rays>

A test piece was irradiated with a Xenon lamp at 162 W/m² for 40 hrs, and then the appearance thereof was evaluated based on evaluation criteria below.

### [Evaluation criteria]

A: There was no change in appearance between before and after the exposure to ultraviolet rays.
B: The ingredients after the exposure to ultraviolet rays were bled out to lose brightness or cause fractures or cracks.

### <Coat adhesiveness after exposure to ultraviolet rays>

A test piece was irradiated with a Xenon lamp at 162 W/m² for 40 hrs, and then was evaluated for coat adhesiveness based on evaluation criteria below.

### [Evaluation criteria]

A: There was no change in coat adhesiveness between before and after the exposure to ultraviolet rays.
B: The coat adhesiveness decreased after the exposure to ultraviolet rays as compared with before the exposure to ultraviolet rays.

### <Pencil hardness after exposure to ultraviolet rays>

A test piece was irradiated with a Xenon lamp at 162 W/m² for 40 hrs, and then was evaluated for pencil hardness based on evaluation criteria below.

### <Evaluation criteria>

A: The change of the pencil hardness after the exposure to ultraviolet rays was within 2 ranks.
B: The change of the pencil hardness after the exposure to ultraviolet rays was 3 ranks or more.

### <Anti-fogging property after exposure to ultraviolet rays>

A test piece was irradiated with a Xenon lamp at 162 W/m² for 40 hrs, then was left to stand for 2 hours under an environment of normal temperature, and then was exposed to 35°C and 85%RH (a high temperature and high humidity environment) for 15 minutes. The surface thereof was visually observed during the exposure to the high temperature and high humidity environment and was evaluated for the anti-fogging property based on evaluation criteria below.

### [Evaluation criteria]

A: Until 10 minutes after, an area having poor visibility due to fogging and water droplets was 30% or less.
B: Until 5 minutes after, an area having poor visibility due to fogging and water droplets was 30% or less.
C: In 5 minutes after, an area having poor visibility due to fogging and water droplets was more than 30%.

### <Anti-fouling property after exposure to ultraviolet rays>

A test piece was irradiated with a Xenon lamp at 162 W/m² for 40 hrs, and then the surface of the anti-fogging and anti-fouling layer was made dirty with Sharpie PROFESSIONAL (black permanent marker, product name, manufactured by Newell Rubbermaid). After the surface was wiped with a sheet of tissue paper (ELLEAIR, manufactured by Daio Paper Corporation) 10 times so that a circle was drawn, the surface was visually observed. Then, the evaluation was performed based on the following evaluation criteria.

### [Evaluation criteria]

A: The surface favorably repelled the permanent marker, and stain disappeared by wiping it 2 to 5 times.
B: The surface weakly repelled the permanent marker, and stain disappeared by wiping it 6 to 10 times.
C: The surface did not repel the permanent marker, and stain remained even after the surface was wiped 10 times.

### <Color change resistance after exposure to ultraviolet rays>

A test piece was irradiated with a Xenon lamp at 162 W/m² for 40 hrs, and then was exposed to 85°C85%RH (a high-temperature and high-humidity environment) for 24 hours. After the exposure, the surface thereof was visually observed and was evaluated for color change resistance based on the following evaluation criteria.

### [Evaluation criteria]

A: There was no change from before the exposure to ultraviolet rays.
B: The surface was yellowed as compared with before the exposure to ultraviolet rays, and the color difference ΔE was greater than 5.

The color difference ΔE was calculated from the regular reflectance spectrum measured at an incident angle of 5° in the range of from 380 to 780 nm using Spectrophotometer UH4150 manufactured by Hitachi High-Tech Science Corporation.

### (Example 1)

### <Formation of primer layer>

On a mirror (a mirror obtained by forming a silver film on float plate glass), the following resin composition for forming a primer layer was coated so that an average thickness thereof after drying and curing was 2 µm. After the coating, the resultant was dried in an oven of 80°C for 3 minutes. Ultraviolet rays were emitted with a high pressure mercury lamp at a radiation dose of 500 mJ/cm² in the air atmosphere to obtain a primer layer.

### -Resin composition for forming primer layer-

| | |
|---|---|
| • UT5181 (manufactured by The Nippon Synthetic Chemical Industry Co., Ltd., urethane acrylate) | 65.0 parts by mass |
| • EBECRYL 40 (manufactured by DAICEL-ALLNEX LTD.) | 35.0 parts by mass |
| • UV3500 (manufactured by BYK) | 0.05 parts by mass |
| • IRGACURE 184 (manufactured by BASF) | 3.0 parts by mass |
| • Solvent PGME (propylene glycol monomethyl ether) | 900 parts by mass |

### <Formation of anti-fogging and anti-fouling layer>

On the primer layer, the active energy ray curable resin composition described in Table 2-1 was coated so that an average thickness thereof after drying and curing was 30 µm. After the coating, the resultant was dried in an oven of 80°C for 2 minutes. Ultraviolet rays were emitted with a metal halide lamp at a radiation dose of 500 mJ/cm² under nitrogen atmosphere (oxygen concentration of less than 1.0% by volume) to cure an anti-fogging and anti-fouling layer. As a result, an anti-fogging and anti-fouling laminate was obtained.

The anti-fogging and anti-fouling laminate obtained was evaluated as described above. Results were presented in Table 2-1.

### (Examples 2 to 6)

An anti-fogging and anti-fouling laminate was obtained in the same manner as in Example 1 except that the formulation of the active energy ray curable resin composition for forming an anti-fogging and anti-fouling layer, and the average thickness of the anti-fogging and anti-fouling layer in Example 1 were changed as described in Table 2-1.

The anti-fogging and anti-fouling laminate obtained was evaluated in the same manner as in Example 1. Results were presented in Table 2-1.

### (Example 7)

An anti-fogging and anti-fouling laminate was obtained in the same manner as in Example 1 except that the average thickness of the primer layer in Example 1 was changed to 5 µm.

The anti-fogging and anti-fouling laminate obtained was evaluated in the same manner as in Example 1. Results were presented in Table 2-1.

### (Comparative Examples 1 to 4 and 6)

Laminates were obtained in the same manner as in Example 1 except that the formulation of the active energy ray curable resin composition for forming an anti-fogging and anti-fouling layer, and the average thickness of the anti-fogging and anti-fouling layer in Example 1 were changed as described in Table 2-2.

The laminates obtained were evaluated in the same manner as in Example

### 1. Results were presented in Table 2-2.

### (Comparative Example 5)

A laminate was obtained in the same manner as in Example 1 except that the average thickness of the primer layer in Example 1 was changed to 0.3 µm.

The laminate obtained was evaluated in the same manner as in Example 1. Results were presented in Table 2-2.

### (Comparative Examples 8, 9, 11, and 12)

Anti-fogging and anti-fouling laminates were obtained in the same manner as in Example 1 except that the formulation of the active energy ray curable resin composition for forming an anti-fogging and anti-fouling layer, and the average thickness of the anti-fogging and anti-fouling layer in Example 1 were changed as described in Table 2-3.

The laminate obtained was evaluated in the same manner as in Example 1. Results were presented in Table 2-3.

### (Comparative Example 10)

A laminate was obtained in the same manner as in Example 1 except that the formulation of the active energy ray curable resin composition for forming an anti-fogging and anti-fouling layer in Example 1 was changed as described in Table 2-3 and further the atmosphere upon curing of the anti-fogging and anti-fouling layer in Example 1 was changed to the air atmosphere.

The laminate obtained was evaluated in the same manner as in Example 1. Results were presented in Table 2-3.

### (Comparative Examples 8 and 10 to 14)

Anti-fogging and anti-fouling laminates were obtained in the same manner as in Example 1 except that the formulation of the active energy ray curable resin composition for forming an anti-fogging and anti-fouling layer, and the average thickness of the anti-fogging and anti-fouling layer in Example 1 were changed as described in Table 2-4.

The anti-fogging and anti-fouling laminates were evaluated in the same manner as in Example 1. Results were presented in Table 2-4.

### (Example 9)

An anti-fogging and anti-fouling laminate was obtained in the same manner as in Example 1 except that the average thickness of the primer layer in Example 1 was changed to 1 µm.

The anti-fogging and anti-fouling laminate obtained was evaluated in the same manner as in Example 1. Results were presented in Table 2-4.

### (Examples 15 to 17)

Anti-fogging and anti-fouling laminates were obtained in the same manner as in Example 1 except that the formulation of the active energy ray curable resin composition for forming an anti-fogging and anti-fouling layer in Example 1 was changed as described in Table 2-5.

The anti-fogging and anti-fouling laminate obtained was evaluated in the same manner as in Example 1. Results were presented in Table 2-5.

### (Comparative Examples 12 to 16)

Anti-fogging and anti-fouling laminates were obtained in the same manner as in Example 2 except that the formulation of the active energy ray curable resin composition for forming an anti-fogging and anti-fouling layer in Example 2 was changed as described in Table 2-6.

The anti-fogging and anti-fouling laminate obtained was evaluated in the same manner as in Example 1. Results were presented in Table 2-6.

### (Comparative Examples 17 to 19)

Laminates were obtained in the same manner as in Example 1 except that the formulation of the active energy ray curable resin composition for forming an anti-fogging and anti-fouling layer, and the average thickness of the anti-fogging and anti-fouling layer in Example 1 were changed as described in Table 2-7.

The anti-fogging and anti-fouling laminates were evaluated in the same manner as in Example 1. Results were presented in Table 2-7.

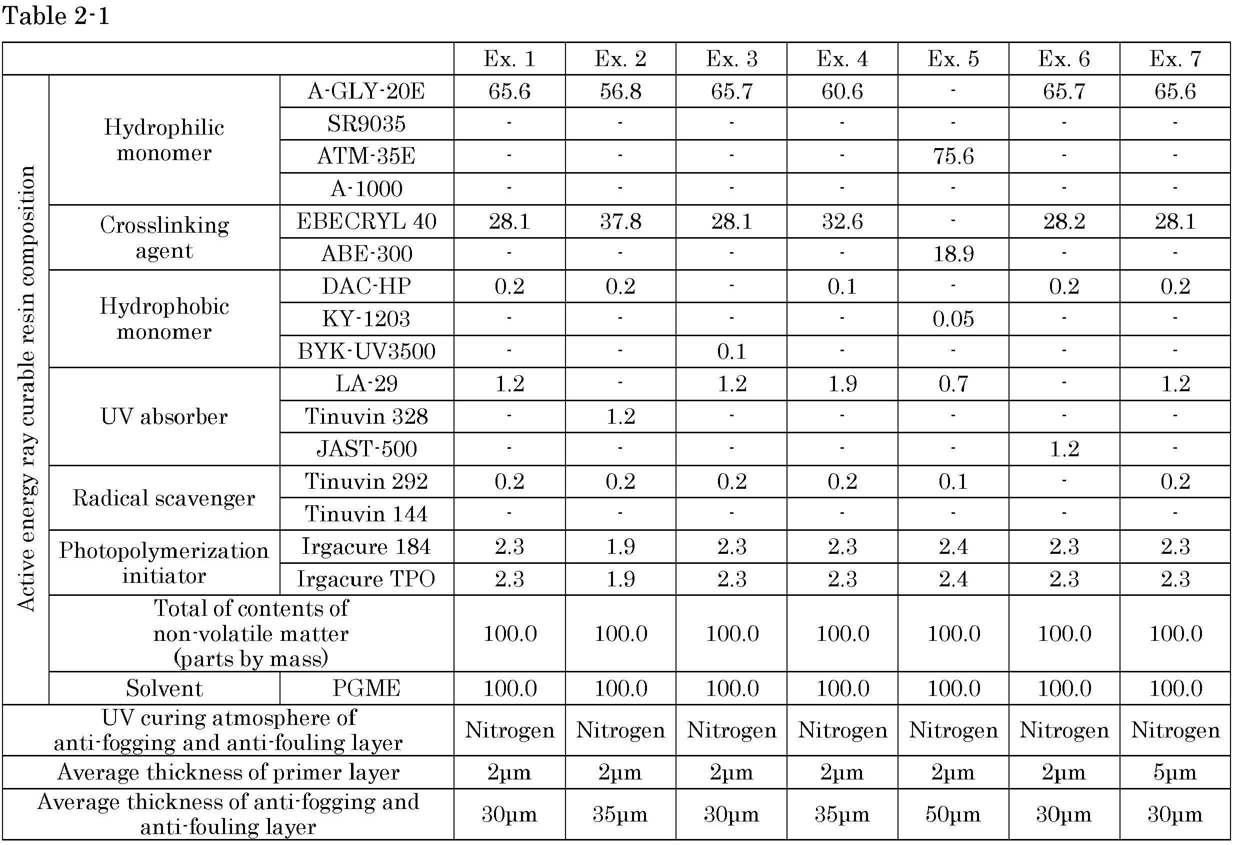

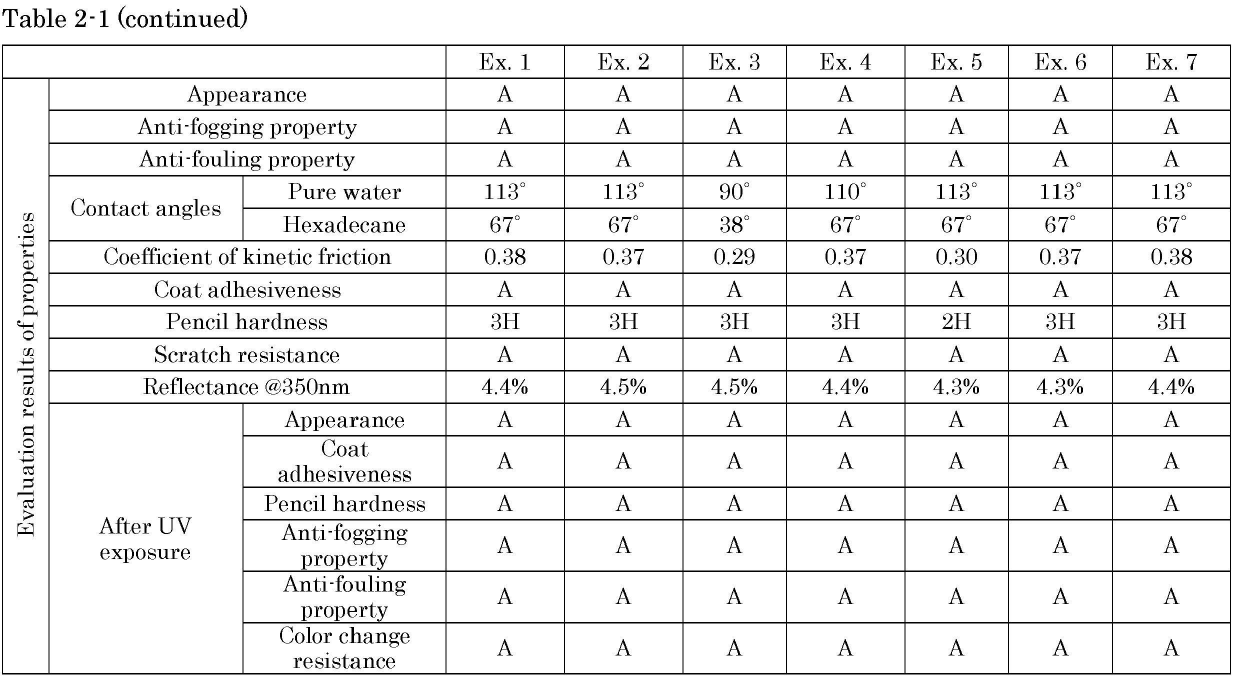

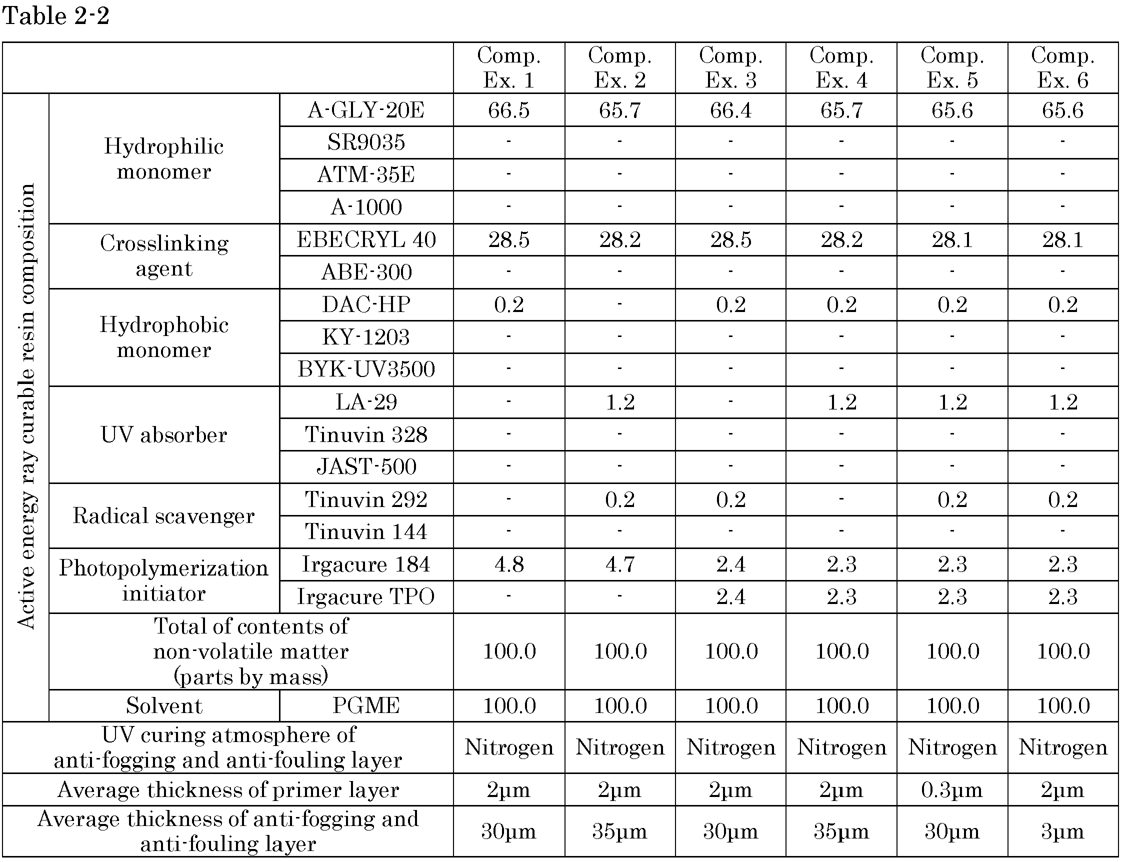

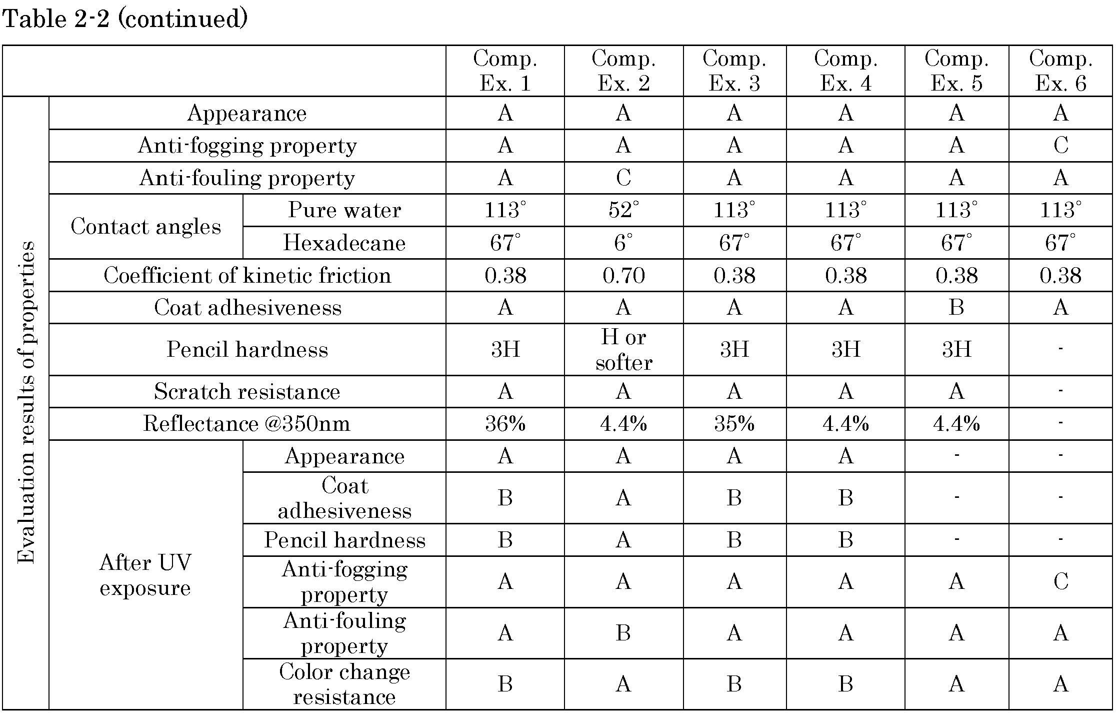

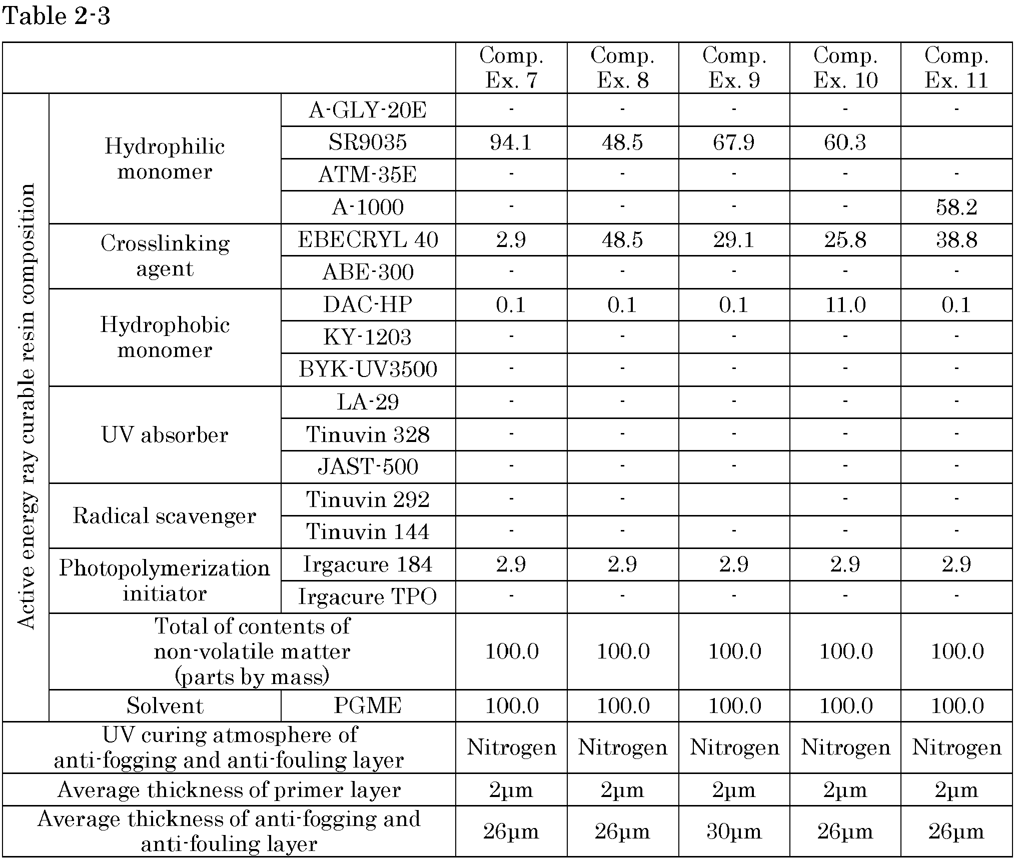

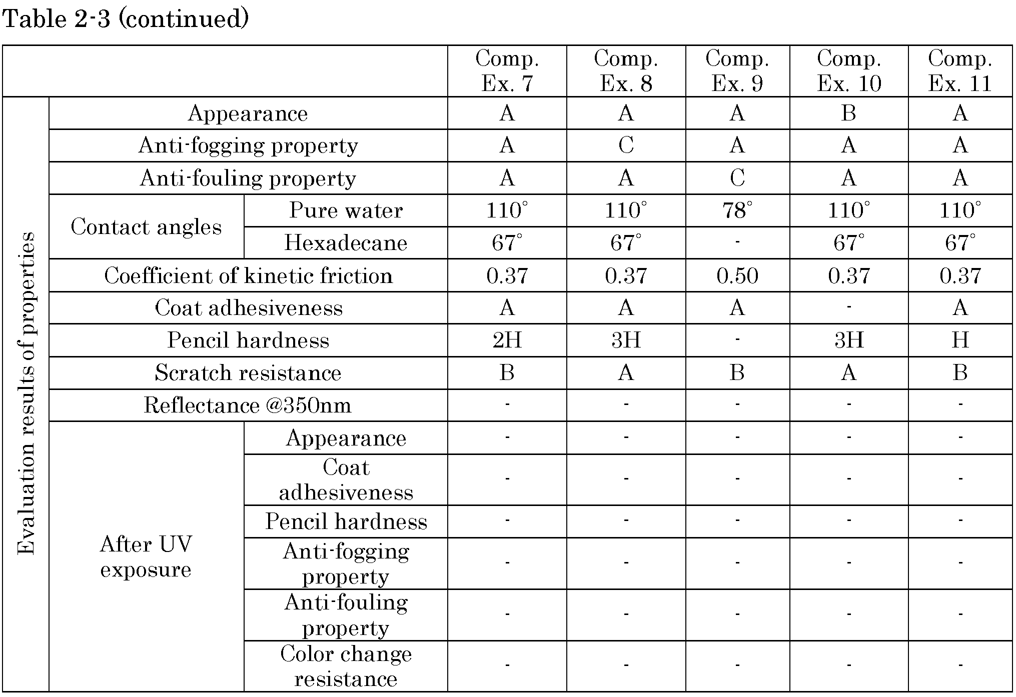

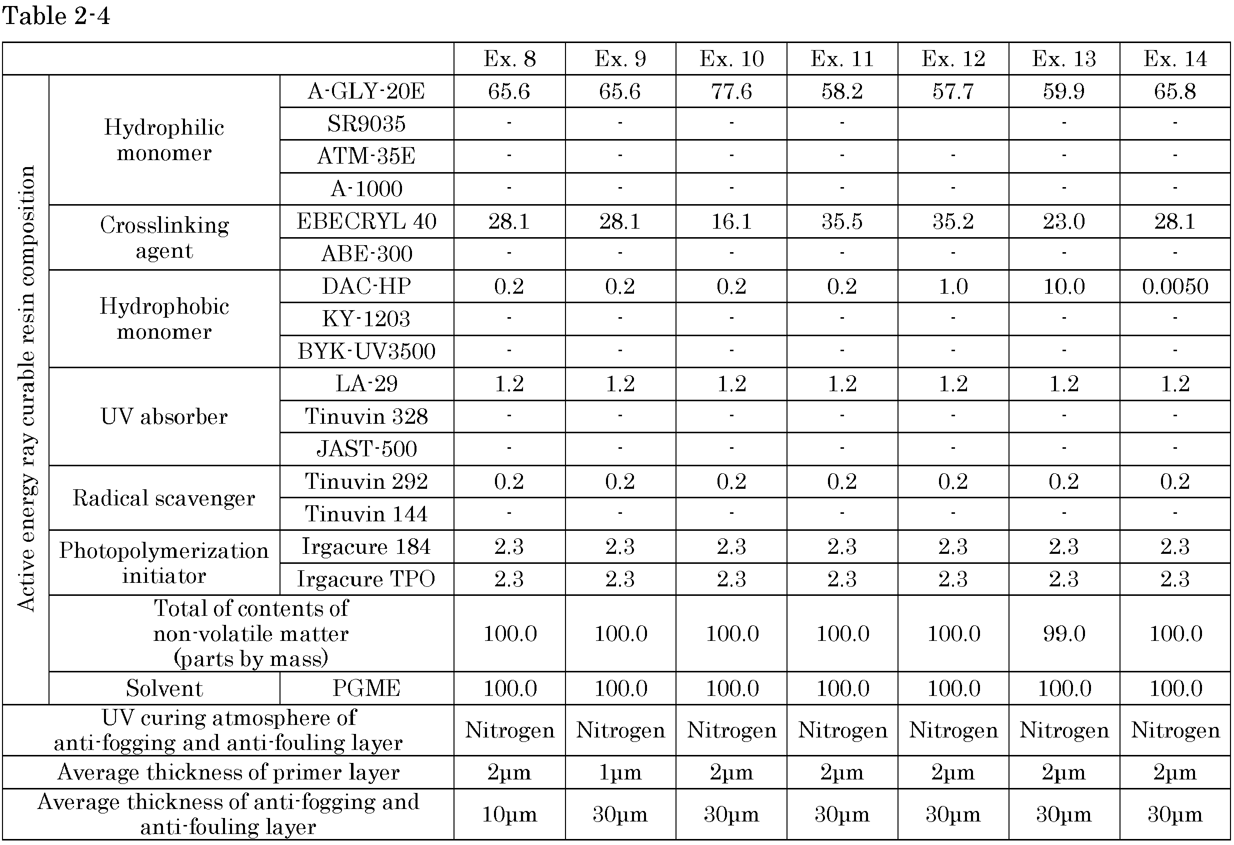

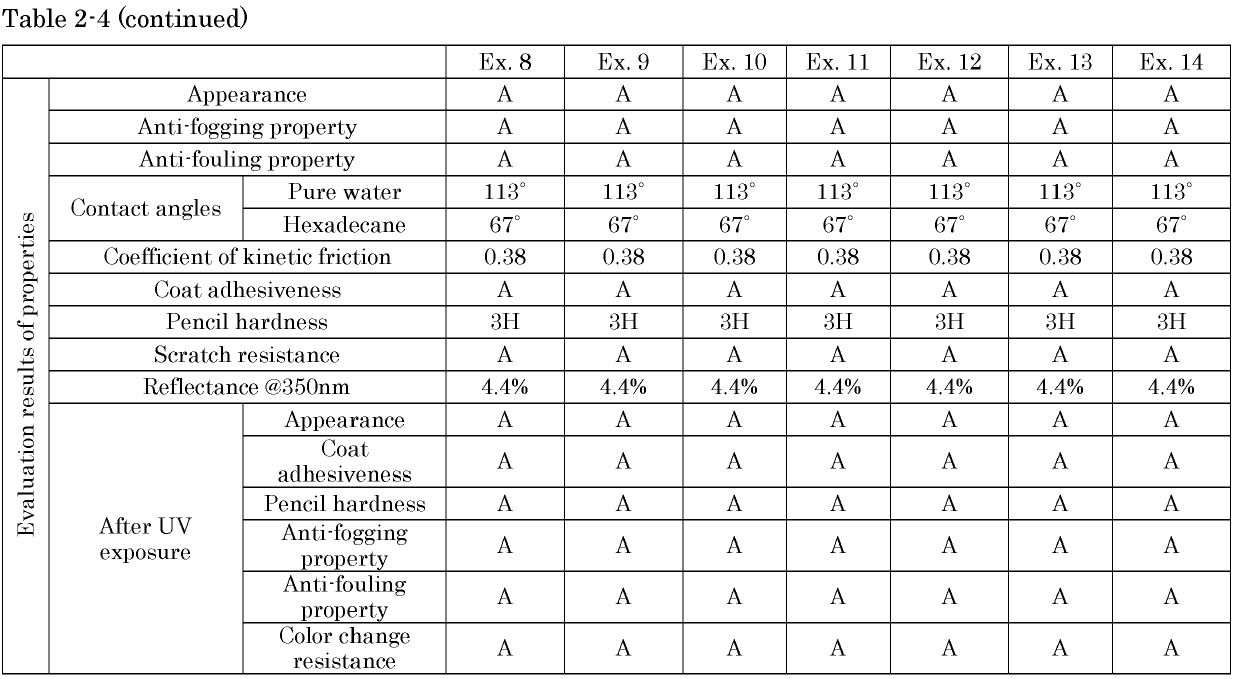

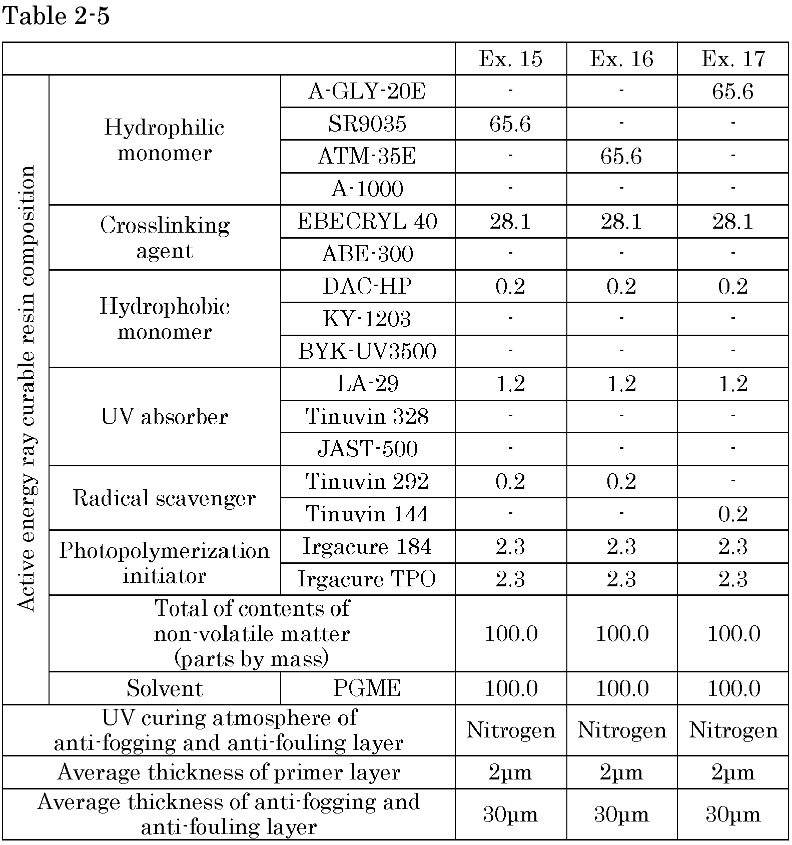

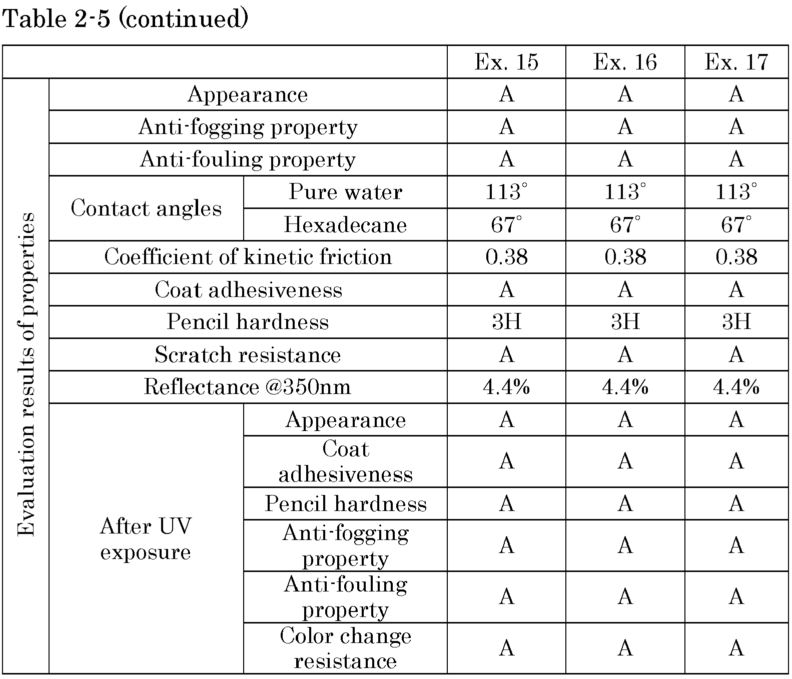

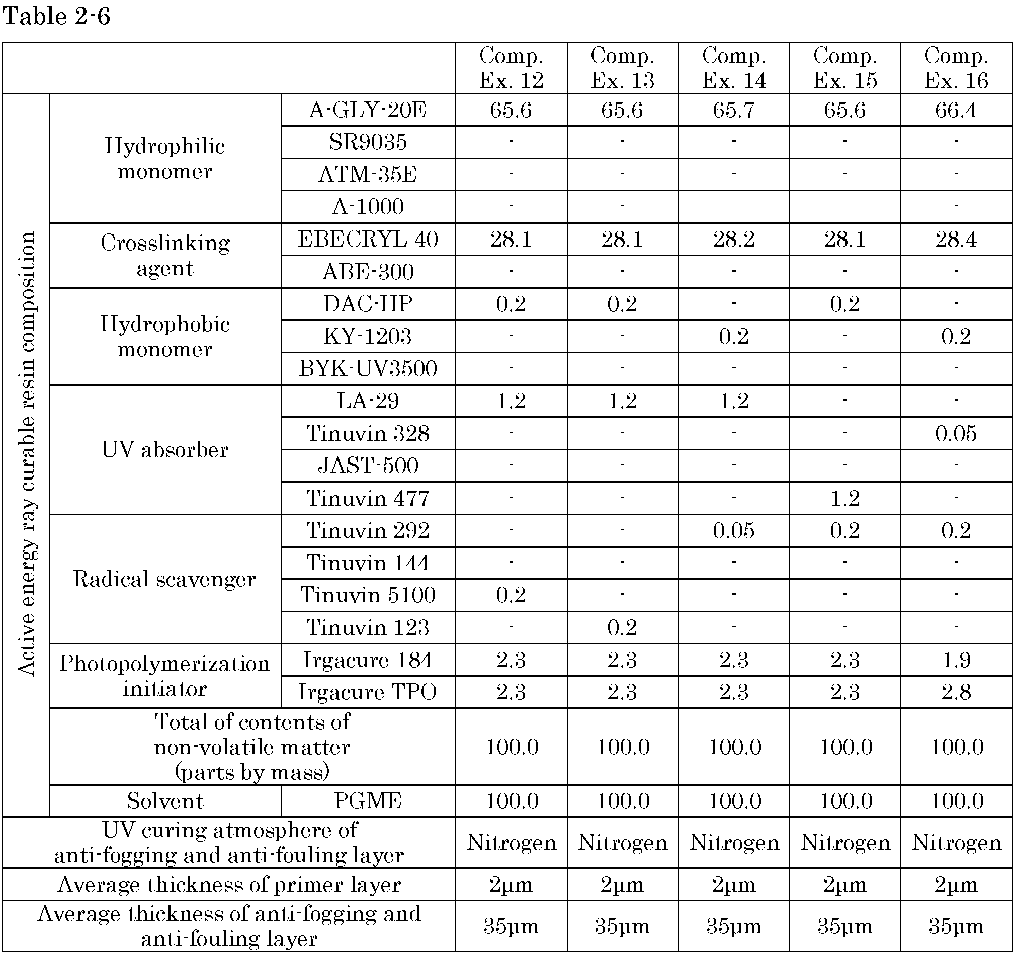

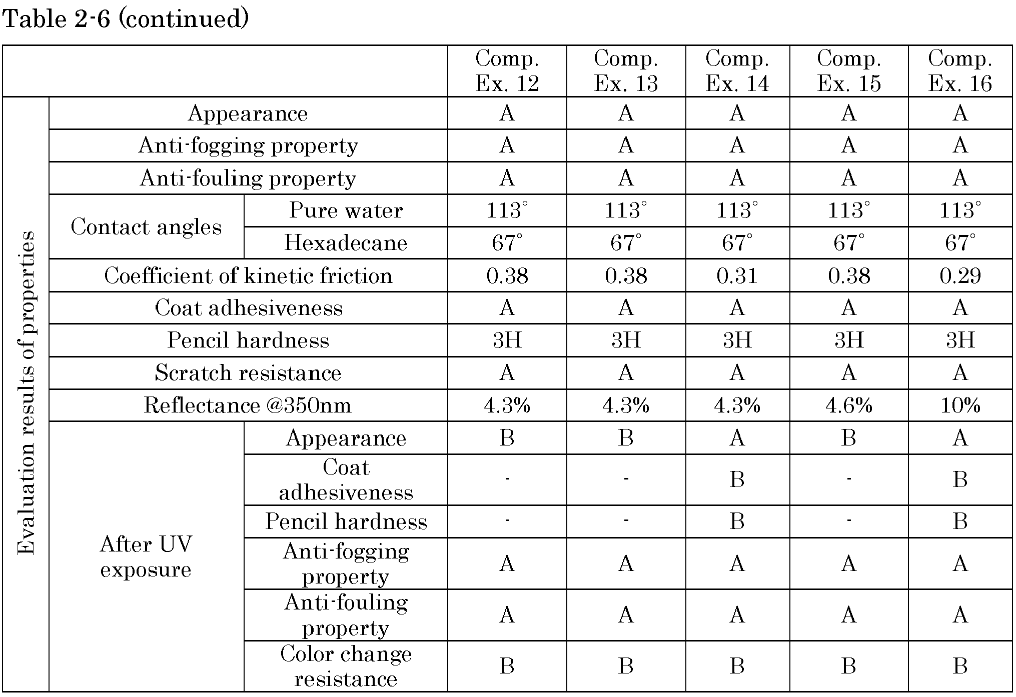

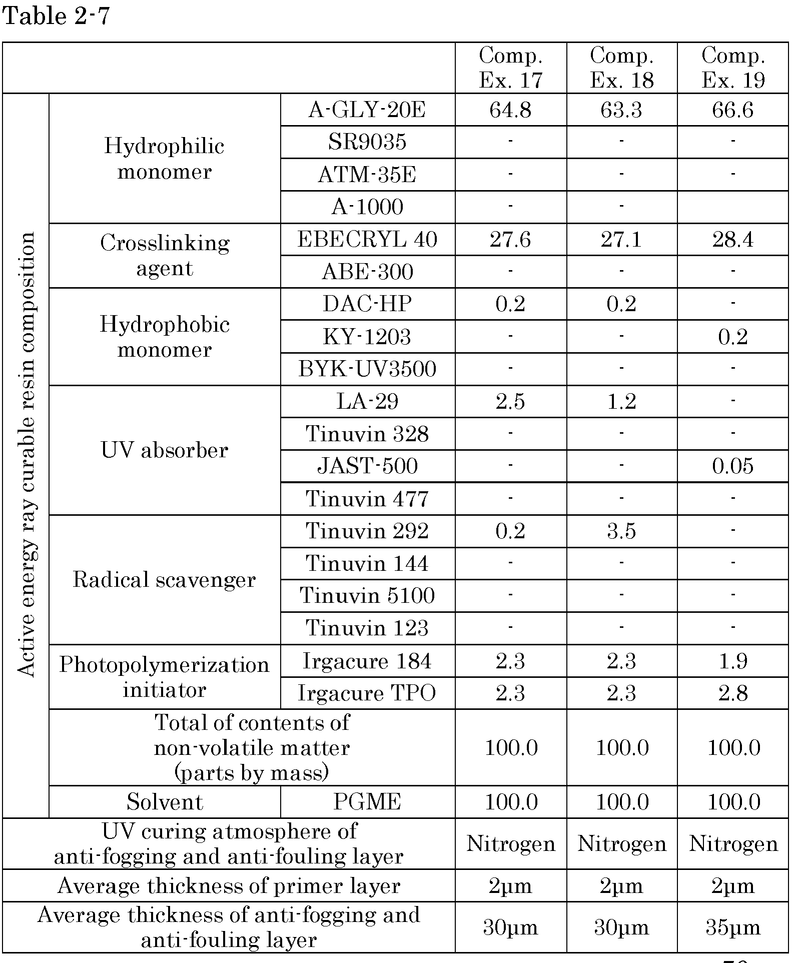

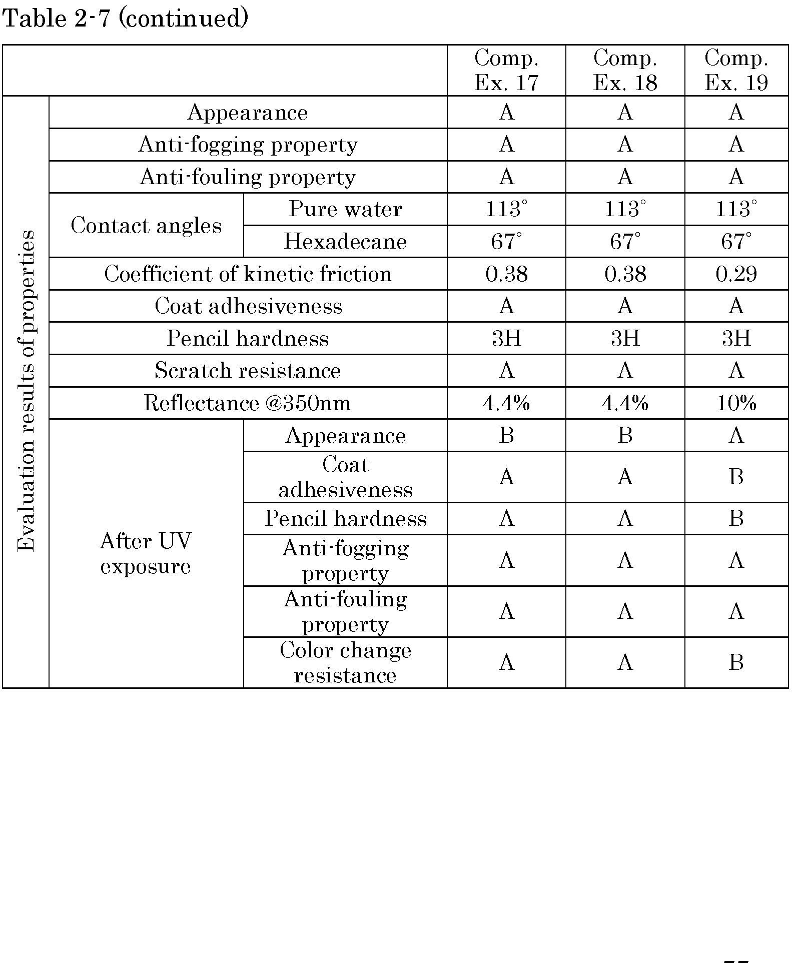

In Table 2-1 to Tables 2-7, a unit of a content of each component in the active energy ray curable resin composition is part(s) by mass.

Details of the materials described in Table 2-1 to Tables 2-7 are as follows.

In a part presenting "-" in Comparative Examples, the evaluation was not performed because a result of another evaluation was insufficient.

### <Hydrophilic monomer>

- A-GLY-20E: Ethoxylated glycerin triacrylate, manufactured by Shin Nakamura Chemical Co., Ltd.
- SR9035: Ethoxylated (15) trimethylolpropane triacrylate, manufactured by

### SARTOMER

- ATM-35E: Ethoxylated pentaerythritol tetraacrylate, manufactured by Shin Nakamura Chemical Co., Ltd.

### «Others»

- A-1000: Polyethylene glycol diacrylate, manufactured by Shin Nakamura Chemical Co., Ltd.

### <Crosslinking agent>

- EBECRYL40: Pentaerythritol alkoxy tetraacrylate, manufactured by DAICEL-ALLNEX LTD.
- ABE-300: Ethoxylated bisphenol A diacrylate, manufactured by Shin Nakamura Chemical Co., Ltd.

### <Hydrophobic monomer>

- OPTOOL DAC-HP: Terminal (meth)acrylic-modified perfluoropolyether additive, manufactured by DAIKIN INDUSTRIES, LTD.
- KY-1203: Perfluoropolyether-containing acrylate, manufactured by Shin-Etsu Chemical Co., Ltd.
- BYK-UV 3500: Polyether-modified polydimethylsiloxane containing an acrylic functional group, manufactured by BYK Chemie, Japan.

### <UV absorber>

- LA-29: ADEKA STAB LA-29, 2-(2H-Benzotriazol-2-yl)-4-(1,1,3,3-tetrabutyl)phenol, manufactured by ADEKA

### [Benzotriazole-based]

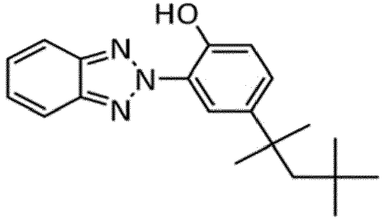

- Tinuvin328: 2-(2'-Hydrozy-3',5'-di-amylphenyl)benzotriazole, manufactured by BASF

### [Benzotriazole-based]

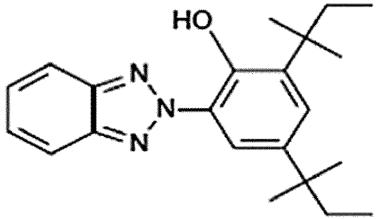

- JAST-500: pkb=5.99, 6-(2-benzotriazoryl)-4-tert-octyl-6'-tert-butyl-4'-methyl-2,2'-methylene bisphenol, manufactured by JOHOKU CHEMICAL CO., LTD.

### [Benzotriazole-based] UV absorber having a radical scavenging structure

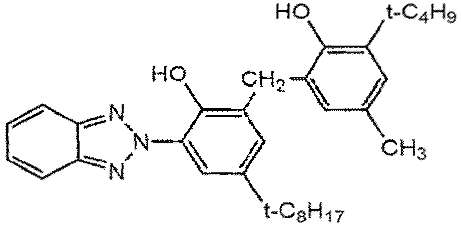

This UV absorber having a radical scavenging structure (JAST-500) has a semi hindered phenol structure next to the benzotriazole structure.
- Tinuvin 477: manufactured by BASF

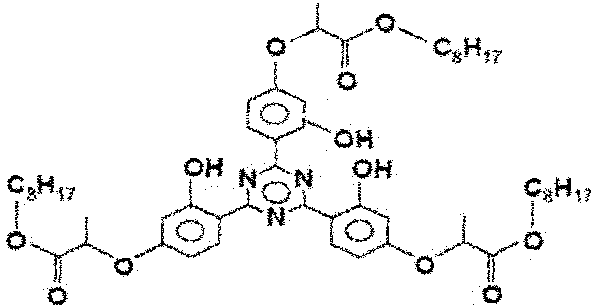

### <Radical scavenger>

- Tinuvin292: manufactured by BASF, pkb=5.0,
   70-80%bis(1,2,2,6,6-pentamethyl-4-piperidyl)sebacate
   20-30% methyl 1,2,2,6,6-pentamethyl-4-piperidylsebacate

### [Bis(1,2,2,6,6,-pentamethyl-4-piperidyl)=decanedioate]

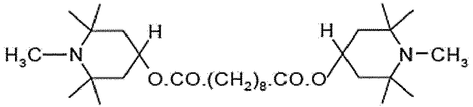

This radical scavenger (Tinuvin292) has a hindered amine structure.
- Tinuvin144: manufactured by BASF, pkb=5.3, Bis(1,2,2,6,6-pentamethyl-4-piperidyl) [[3,5-bis(1,1-dimethylethyl)-4-hydroxyphenyl]methyl]butyl malonate

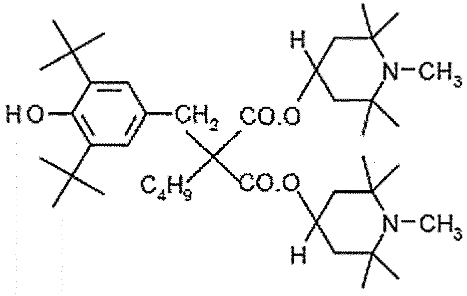

This radical scavenger (Tinuvin144) has a hindered amine structure and a hindered phenol structure.
- Tinuvin5100: manufactured by BASF, pkb=9.6,
   Aminoether-based hindered amine compound
- Tinuvin123: manufactured by BASF, pkb=9.6

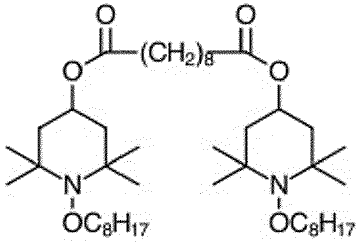

### <Photopolymerization initiator>

- IRGACURE 184: 1-Hydroxy-cyclohexyl-phenyl-ketone, manufactured by BASF
- IRGACURE TPO: 2,4,6-trimethylbenzoyl-diphenyl-phosphone oxide, manufactured by BASF

### <Solvent>

PGME: Propylene glycol monomethyl ether

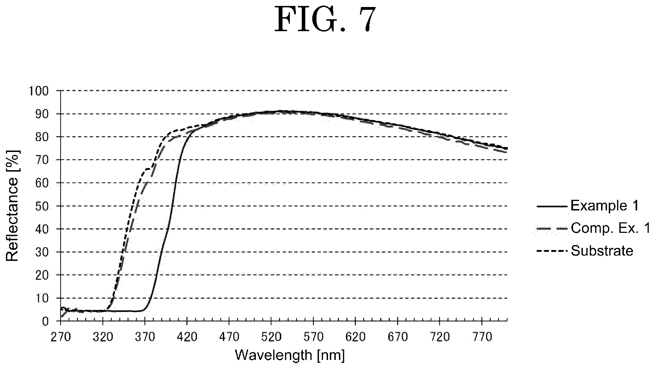

The anti-fogging and anti-fouling laminate of Example 1, the laminate of Comparative Example 1, and the substrate [mirror (a mirror obtained by forming a silver film on float plate glass, the average thickness thereof being 5 mm) were measured for a regular reflectance spectrum at an incident angle of 5° in the range of from 270 to 800 nm using Spectrophotometer UH4150 manufactured by Hitachi High-Tech Science Corporation. Results were presented in FIG. 7.

In Example 1, the reflectance in the range of from 270 nm to 350 nm was from 4 to 5%, indicating that the anti-fogging and anti-fouling laminate absorbs 70% or more of near ultraviolet rays in this range (from 270 nm to 350 nm).

In Comparative Example 1, the reflectance at 350 nm was 36% and the laminate does not absorb 70% or more of this wavelength. As a result, the adhesiveness and pencil hardness of the anti-fogging and anti-fouling layer were degraded by the exposure to ultraviolet rays.

The anti-fogging and anti-fouling laminates of Examples 1 to 17 were anti-fogging and anti-fouling laminates that are excellent in appearance, adhesiveness, an anti-fouling property, and scratch resistance, are excellent in an anti-fogging property even under higher temperature and higher humidity conditions, and further are not degraded in those properties and hardly cause color change even when exposed to ultraviolet rays for a long period of time.

The laminate of Comparative Example 1 was insufficient in the coat adhesiveness, pencil hardness, and color change resistance after the exposure to ultraviolet rays since the active energy ray curable resin composition for forming the anti-fogging and anti-fouling layer did not include a UV absorber and a radical scavenger.

The laminate of Comparative Example 2 was insufficient in an anti-fouling property and scratch resistance since the active energy ray curable resin composition for forming the anti-fogging and anti-fouling layer did not include a hydrophobic monomer and the pencil hardness of the anti-fogging and anti-fouling layer was softer than 2H.

The laminate of Comparative Example 3 was insufficient in the coat adhesiveness, pencil hardness, and color change resistance after the exposure to ultraviolet rays since the active energy ray curable resin composition for forming the anti-fogging and anti-fouling layer did not include a UV absorber.

The laminate of Comparative Example 4 was insufficient in the coat adhesiveness, pencil hardness, and color change resistance after the exposure to ultraviolet rays since the active energy ray curable resin composition for forming the anti-fogging and anti-fouling layer did not include a radical scavenger.

The laminate of Comparative Example 5 was insufficient in the coat adhesiveness since the average thickness of the primer layer was too small; i.e., 0.3 µm.

The laminate of Comparative Example 6 was insufficient in the anti-fogging property since the anti-fogging and anti-fouling layer was too thin; i.e., 3 µm.

The laminate of Comparative Example 7 was insufficient in scratch resistance since the content of the hydrophilic monomer in the active energy ray curable resin composition for forming the anti-fogging and anti-fouling layer was too large.

The laminate of Comparative Example 8 was insufficient in the anti-fogging property since the content of the hydrophilic monomer in the active energy ray curable resin composition for forming the anti-fogging and anti-fouling layer was too small.

The laminate of Comparative Example 9 was insufficient in the anti-fouling property and scratch resistance since the coefficient of kinetic friction became high as the result of UV irradiation in the air atmosphere when forming the anti-fogging and anti-fouling layer.

The laminate of Comparative Example 10 was insufficient in the appearance since the content of the hydrophobic monomer in the active energy ray curable resin composition for forming the anti-fogging and anti-fouling layer was too large.

The laminate of Comparative Example 11 was insufficient in scratch resistance since the acrylic equivalent of the hydrophilic monomer in the active energy ray curable resin composition for forming the anti-fogging and anti-fouling layer was high and the pencil hardness was softer than 2H.

The laminates of Comparative Examples 12 and 13 caused color change after the exposure to ultraviolet rays since the pkb of the radical scavenger in the active energy ray curable resin composition for forming the anti-fogging and anti-fouling layer was more than 9.0 to lead to the deterioration in the radical scavenging performance, and fractures and cracks were observed in the appearance of the surface of the anti-fogging and anti-fouling layer.

The laminate of Comparative Example 14 caused color change after the exposure to ultraviolet rays since the content of the radical scavenger in the active energy ray curable resin composition for forming the anti-fogging and anti-fouling layer was too small. Furthermore, the anti-fogging and anti-fouling layer was degraded in the adhesiveness and hardness after the exposure to ultraviolet rays.

The laminate of Comparative Example 15 caused color change after the exposure to ultraviolet rays since the UV absorber in the active energy ray curable resin composition for forming the anti-fogging and anti-fouling layer had a triazine structure, and fractures and cracks were observed in the appearance of the surface of the anti-fogging and anti-fouling layer.

The laminate of Comparative Example 16 caused color change after the exposure to ultraviolet rays since the content of the UV absorber in the active energy ray curable resin composition for forming the anti-fogging and anti-fouling layer was too small. Furthermore, the anti-fogging and anti-fouling layer after the exposure to ultraviolet rays was degraded in the adhesiveness and hardness after the exposure to ultraviolet rays.

The laminate of Comparative Example 17 caused bleeding of the UV absorber after the exposure to ultraviolet rays since the content of the UV absorber in the active energy ray curable resin composition for forming the anti-fogging and anti-fouling layer was too large.

The laminate of Comparative Example 18 caused bleeding of the radical scavenger after the exposure to ultraviolet rays since the content of the radical scavenger in the active energy ray curable resin composition for forming the anti-fogging and anti-fouling layer was too large.

The laminate of Comparative Example 19 caused color change after the exposure to ultraviolet rays since the content of the UV absorber in the active energy ray curable resin composition for forming the anti-fogging and anti-fouling layer was too small. Furthermore, the anti-fogging and anti-fouling layer was degraded in the adhesiveness and hardness after the exposure to ultraviolet rays.

### Industrial Applicability

The anti-fogging and anti-fouling laminate of the present invention can be used in, for example, glass windows, refrigerating/freezing show cases, partitions, window materials such as windows of automobiles, mirrors of wet areas such as bathrooms and washrooms, mirrors of side mirrors of automobiles, floors and walls of bathrooms, surfaces of solar cell panels, and crime prevention monitoring cameras. In addition, the anti-fogging and anti-fouling laminate of the present invention is easily molded and processed. Therefore, it can be used, by using in-mold molding and insert molding, in glasses, goggles, helmets, lens, microlens arrays, head light covers, front panels, side panels, and rear panels of automobiles.

### Reference Signs List

- 11: substrate made of a resin
- 12: primer layer
- 13: anti-fogging and anti-fouling layer

## Claims

1. An anti-fogging and anti-fouling laminate comprising:
a substrate;
a primer layer on the substrate; and
an anti-fogging and anti-fouling layer on the primer layer, the anti-fogging and anti-fouling layer having a flat surface,
wherein an average thickness of the primer layer is 0.5 µm or more,
the anti-fogging and anti-fouling layer has pencil hardness of 2H or harder, a coefficient of kinetic friction of 0.4 or less, and an average thickness of 20 µm or more,
the anti-fogging and anti-fouling layer is a cured product of an active energy ray curable resin composition,
the active energy ray curable resin composition comprises a hydrophilic monomer having an alkylene oxide equivalent of 100 or less and an acrylic equivalent of 200 or more but 500 or less, and a hydrophobic monomer including at least one selected from the group consisting of fluorine and silicon,
a content of the hydrophilic monomer in the active energy ray curable resin composition is 55% by mass or more but 90% by mass or less relative to non-volatile matter of the active energy ray curable resin composition,
a content of the hydrophobic monomer in the active energy ray curable resin composition is 0.001% by mass or more but 1.0% by mass or less relative to the non-volatile matter of the active energy ray curable resin composition,
the active energy ray curable resin composition further comprises a UV absorber having no triazine structure and a radical scavenger having a pkb of 9.0 or less,
a content of the UV absorber having no triazine structure in the active energy ray curable resin composition is 0.1% by mass or more but 2.0% by mass or less relative to the non-volatile matter of the active energy ray curable resin composition, and
a content of the radical scavenger having a pkb of 9.0 or less in the active energy ray curable resin composition is 0.08% by mass or more but 3.0% by mass or less relative to the non-volatile matter of the active energy ray curable resin composition.

2. An anti-fogging and anti-fouling laminate comprising:
a substrate;
a primer layer on the substrate; and
an anti-fogging and anti-fouling layer on the primer layer, the anti-fogging and anti-fouling layer having a flat surface,
wherein an average thickness of the primer layer is 0.5 µm or more,
the anti-fogging and anti-fouling layer has pencil hardness of 2H or harder, a coefficient of kinetic friction of 0.4 or less, and an average thickness of 20 µm or more,
the anti-fogging and anti-fouling layer is a cured product of an active energy ray curable resin composition,
the active energy ray curable resin composition comprises a hydrophilic monomer having an alkylene oxide equivalent of 100 or less and an acrylic equivalent of 200 or more but 500 or less, and a hydrophobic monomer including at least one selected from the group consisting of fluorine and silicon,
a content of the hydrophilic monomer in the active energy ray curable resin composition is 55% by mass or more but 90% by mass or less relative to non-volatile matter of the active energy ray curable resin composition,
a content of the hydrophobic monomer in the active energy ray curable resin composition is 0.001% by mass or more but 1.0% by mass or less relative to the non-volatile matter of the active energy ray curable resin composition,
the active energy ray curable resin composition further comprises a UV absorber having a radical scavenging structure, no triazine structure, and a pkb of 9.0 or less, and
a content of the UV absorber having a radical scavenging structure, no triazine structure, and a pkb of 9.0 or less in the active energy ray curable resin composition is 0.1% by mass or more but 2.0% by mass or less relative to the non-volatile matter of the active energy ray curable resin composition.

3. The anti-fogging and anti-fouling laminate according to claim 1 or 2,
wherein the anti-fogging and anti-fouling layer absorbs 70% or more of near ultraviolet rays having wavelengths of 350 nm or shorter.

4. The anti-fogging and anti-fouling laminate according to any one of claims 1 to 3,
wherein a surface of the anti-fogging and anti-fouling layer has a pure water contact angle of 80° or more and a hexadecane contact angle of 35° or more.

5. The anti-fogging and anti-fouling laminate according to any one of claims 1 to 4,
wherein the substrate is a substrate made of glass.

6. The anti-fogging and anti-fouling laminate according to any one of claims 1 to 5,
wherein an average thickness of the anti-fogging and anti-fouling layer is 20 µm to 100 µm.

7. The anti-fogging and anti-fouling laminate according to any one of claims 1 to 6,
wherein an average thickness of the primer layer is 1 µm to 5 µm.

8. The anti-fogging and anti-fouling laminate according to any one of claims 1 to 7,
wherein the active energy ray curable resin composition comprises a crosslinking agent having an alkylene oxide equivalent of more than 100 and an acrylic equivalent of less than 400,
wherein a content of the crosslinking agent in the active energy ray curable resin composition is 20% by mass or more but 40% by mass or less relative to the non-volatile matter of the active energy ray curable resin composition.

9. A product comprising:
the anti-fogging and anti-fouling laminate according to any one of claims 1 to 8 on a surface of the product.

10. A method for producing the anti-fogging and anti-fouling laminate according to any one of claims 1 to 8, the method comprising:
irradiating an uncured layer formed on the primer layer of the active energy ray curable resin composition with ultraviolet rays under an atmosphere having an oxygen concentration of less than 1.0% by volume, to form the anti-fogging and anti-fouling layer.

11. An anti-fogging method comprising:
warming the anti-fogging and anti-fouling laminate according to any one of claims 1 to 8 to a temperature equal to or higher than normal temperature, to improve an anti-fogging property of the anti-fogging and anti-fouling layer.

12. An anti-fogging method comprising:
cleaning the anti-fogging and anti-fouling layer of the anti-fogging and anti-fouling laminate according to any one of claims 1 to 8 to maintain an anti-fogging property of the anti-fogging and anti-fouling layer.

13. An active energy ray curable resin composition comprising:
a hydrophilic monomer;
a hydrophobic monomer; and
a photopolymerization initiator,
wherein the hydrophilic monomer has an alkylene oxide equivalent of 100 or less and an acrylic equivalent of 200 or more but 500 or less,
the hydrophobic monomer includes at least one selected from the group consisting of fluorine and silicon,
a content of the hydrophilic monomer in the active energy ray curable resin composition is 55% by mass or more but 90% by mass or less relative to non-volatile matter of the active energy ray curable resin composition,
a content of the hydrophobic monomer in the active energy ray curable resin composition is 0.001% by mass or more but 1.0% by mass or less relative to the non-volatile matter of the active energy ray curable resin composition,
the active energy ray curable resin composition further comprises a UV absorber having no triazine structure and a radical scavenger having a pkb of 9.0 or less,
a content of the UV absorber having no triazine structure in the active energy ray curable resin composition is 0.1% by mass or more but 2.0% by mass or less relative to the non-volatile matter of the active energy ray curable resin composition, and
a content of the radical scavenger having a pkb of 9.0 or less in the active energy ray curable resin composition is 0.08% by mass or more but 3.0% by mass or less relative to the non-volatile matter of the active energy ray curable resin composition.

14. An active energy ray curable resin composition comprising:
a hydrophilic monomer;
a hydrophobic monomer; and
a photopolymerization initiator,
wherein the hydrophilic monomer has an alkylene oxide equivalent of 100 or less and an acrylic equivalent of 200 or more but 500 or less,
the hydrophobic monomer includes at least one selected from the group consisting of fluorine and silicon,
a content of the hydrophilic monomer in the active energy ray curable resin composition is 55% by mass or more but 90% by mass or less relative to non-volatile matter of the active energy ray curable resin composition,
a content of the hydrophobic monomer in the active energy ray curable resin composition is 0.001% by mass or more but 1.0% by mass or less relative to the non-volatile matter of the active energy ray curable resin composition,
the active energy ray curable resin composition further comprises a UV absorber having a radical scavenging structure, no triazine structure, and a pkb of 9.0 or less, and
a content of the UV absorber having a radical scavenging structure, no triazine structure, and a pkb of 9.0 or less in the active energy ray curable resin composition is 0.1% by mass or more but 2.0% by mass or less relative to the non-volatile matter of the active energy ray curable resin composition.

15. The active energy ray curable resin composition according to claim 13 or 14,
wherein a surface of an anti-fogging and anti-fouling layer having a flat surface, which is obtained by curing the active energy ray curable resin composition through active energy rays, has pencil hardness of 2H or harder and a coefficient of kinetic friction of 0.40 or less.

16. The active energy ray curable resin composition according to any one of claims 13 to 15,
wherein the surface of the anti-fogging and anti-fouling layer has a pure water contact angle of 80° or more and a hexadecane contact angle of 35° or more.

17. The active energy ray curable resin composition according to any one of claims 13 to 16,
wherein the active energy ray curable resin composition comprises a solvent having a boiling point of 80°C or more.

18. The active energy ray curable resin composition according to any one of claims 13 to 17,
wherein the active energy ray curable resin composition comprises a crosslinking agent having an alkylene oxide equivalent of more than 100 and an acrylic equivalent of less than 400,
wherein a content of the crosslinking agent in the active energy ray curable resin composition is 20% by mass or more but 40% by mass or less relative to the non-volatile matter of the active energy ray curable resin composition.
